# EUROPÄISCHE PATENTSCHRIFT

(11) **EP 4 475 070 B1**
(45) Veröffentlichungstag und Bekanntmachung des Hinweises auf die Patenterteilung: **22.04.2026**
(21) Anmeldenummer: 23177300.3
(22) Anmeldetag: 05.06.2023
(51) Int. Cl.: G06T 7/00, G06T 7/90, G06N 3/02

(54) **ERKENNEN VON ARTEFAKTEN IN SYNTHETISCHEN MEDIZINISCHEN AUFNAHMEN**
DETECTION OF ARTIFACTS IN SYNTHETIC MEDICAL RECORDS
DÉTECTION D'ARTÉFACTS DANS DES ENREGISTREMENTS MÉDICAUX SYNTHÉTIQUES

(43) Veröffentlichungstag der Anmeldung: 11.12.2024
(73) Patentinhaber: Bayer Aktiengesellschaft, 51373 Leverkusen (DE)
(72) Erfinder: LENGA, Matthias, 51373 Leverkusen (DE); BALTRUSCHAT, Ivo, Matteo, 51373 Leverkusen (DE)
(74) Vertreter: BIP Patents

(56) Entgegenhaltungen:
- WO-A1-2022/020531
- WO-A1-2022/106302
- WO-A1-2022/220721
- US-A1- 2019 122 073
- US-A1- 2019 188 852
- US-A1- 2019 220 977
- US-A1- 2019 333 219
- US-A1- 2023 135 351
- DUDOVITCH GAL ET AL: "Deep Learning Automatic Fetal Structures Segmentation in MRI Scans with Few Annotated Datasets", 29 September 2020, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 365 - 374, XP047564146
- RICHARD OSUALA ET AL: "Data synthesis and adversarial networks: A review and meta-analysis in cancer imaging", ARXIV.ORG, CORNELL UNIVERSITY LIBRARY, 201 OLIN LIBRARY CORNELL UNIVERSITY ITHACA, NY 14853, 27 November 2022 (2022-11-27), XP091378925, DOI: 10.1016/J.MEDIA.2022.102704
- MINGLE XU ET AL: "A Comprehensive Survey of Image Augmentation Techniques for Deep Learning", ARXIV.ORG, CORNELL UNIVERSITY LIBRARY, 201 OLIN LIBRARY CORNELL UNIVERSITY ITHACA, NY 14853, 3 May 2022 (2022-05-03), XP091220309

## Beschreibung

### HINWEIS ZUM URHEBERRECHT

Ein Teil der Offenbarung dieser Patentschrift enthält Material, das dem Urheberrechtsschutz unterliegt. Der Urheberrechtsinhaber hat keine Einwände gegen die Faksimile-Reproduktion der Patentschrift, wie sie in einer Patentakte oder in den Akten des Patentamts erscheint, behält sich aber ansonsten alle Urheberrechte und Rechte jeglicher Art vor. ^{©} 2023 Bayer AG

### TECHNISCHES GEBIET

Die vorliegende Offenbarung betrifft das technische Gebiet der Erzeugung von synthetischen medizinischen Aufnahmen. Gegenstände der vorliegenden Offenbarung sind ein Verfahren, ein Computersystem und ein computerlesbares Speichermedium umfassend ein Computerprogramm zum Erkennen von Artefakten in synthetischen medizinischen Aufnahmen.

### EINLEITUNG

Künstliche Intelligenz findet zunehmend Einzug in die Medizin. Modelle des maschinellen Lernens werden nicht nur verwendet, um Anzeichen von Krankheiten in medizinischen Aufnahmen des menschlichen oder tierischen Körpers zu identifizieren (siehe z.B. WO2018202541A1, WO2020229152A1), sie werden zunehmend auch eingesetzt, um synthetische (künstliche) medizinische Aufnahmen zu erzeugen.

WO2021052896A1 und WO2021069338A1 beschreiben beispielsweise Verfahren zum Erzeugen einer künstlichen medizinischen Aufnahme, die einen Untersuchungsbereich eines Untersuchungsobjekts in einer ersten Zeitspanne zeigt. Die künstliche medizinische Aufnahmen wird mit Hilfe eines trainierten Modells des maschinellen Lernens auf Basis von medizinischen Aufnahmen, die den Untersuchungsbereich in einer zweiten Zeitspanne zeigen, erzeugt. Mit Hilfe des Verfahrens können beispielsweise radiologische Untersuchungen beschleunigt werden; anstatt radiologische Aufnahmen über eine längere Zeitspanne zu messen, werden Messungen nur innerhalb eines Teils der Zeitpanne gemessen und eine oder mehrere radiologische Aufnahmen für den übrigen Teil der Zeitspanne mit Hilfe des trainierten Modells vorhergesagt.

WO2019/074938A1 und WO2022184297A1 beschreiben beispielsweise Verfahren zum Erzeugen einer künstlichen radiologischen Aufnahme, die einen Untersuchungsbereich eines Untersuchungsobjekts nach der Applikation einer Standardmenge eines Kontrastmittels zeigen, obwohl nur eine geringere Menge an Kontrastmittel als die Standardmenge appliziert worden ist. Die Standardmenge ist die vom Hersteller und/oder Vertreiber des Kontrastmittels empfohlene und/oder die von einer Zulassungsbehörde zugelassene und/oder die in einem Beipackzettel zum Kontrastmittel aufgeführte Menge. Die in WO2019/074938A1 und WO2022184297A beschriebenen Verfahren können also zur Reduzierung der Menge an Kontrastmittel eingesetzt werden.

Die von den trainierten Modellen des maschinellen Lernens erzeugten medizinischen Aufnahmen können Fehler aufweisen (siehe z.B.: K. Schwarz et al.: On the Frequency Bias ofGenerative Models, https://doi.org/10.48550/arXiv.2111.02447).

Solche Fehler können problematisch sein, da ein Arzt auf Basis der künstlichen medizinischen Aufnahmen eine Diagnose stellen und/oder eine Therapie initiieren könnte. Wenn ein Arzt künstliche medizinische Aufnahmen begutachtet, muss der Arzt wissen, ob Merkmale in den künstlichen medizinischen Aufnahmen auf reale Merkmale des Untersuchungsobjekts zurückgeführt werden können, oder ob es sich um Artefakte handelt, die auf Fehler bei der Vorhersage durch das trainierte Modell des maschinellen Lernens zurückzuführen sind.

Weiterer relevanter Stand der Technik ist aus Dokument US 2023/135351 A1 bekannt.

### ZUSAMMENFASSUNG

Diese und weitere Probleme werden durch die Gegenstände der vorliegenden Offenbarung adressiert.

Die Erfindung ist in den beigefügten unabhängigen Ansprüchen definiert.

Ein erster Gegenstand der vorliegenden Offenbarung ist ein computer-implementiertes Verfahren zum Erzeugen mindestens eines Vertrauenswertes für ein synthetisches Bild, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an unterschiedlichen Modifikationen des mindestens einen empfangenen Bildes,
- Erzeugen einer Mehrzahl an synthetischen Bildern des Untersuchungsbereichs des Untersuchungsobjekts auf Basis der Modifikationen mittels eines generativen Modells, wobei jedes synthetische Bild eine Vielzahl an Bildelementen umfasst, wobei jedes Bildelement der Vielzahl an Bildelementen einen Teilbereich des Untersuchungsbereichs repräsentiert, wobei jedem Bildelement mindestens ein Farbwert zugeordnet ist,
- Ermitteln eines Streuungsmaßes der Farbwerte korrespondierender Bildelemente der erzeugten synthetischen Bilder, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

Ein weiterer Gegenstand der vorliegenden Offenbarung ist ein Computersystem umfassend
einen Prozessor und
einen Speicher, der ein Anwendungsprogramm speichert, das so konfiguriert ist, dass es, wenn es vom Prozessor ausgeführt wird, eine Operation durchführt, wobei die Operation umfasst:
   - Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
   - Erzeugen einer Mehrzahl an unterschiedlichen Modifikationen des mindestens einen empfangenen Bildes,
   - Erzeugen einer Mehrzahl an synthetischen Bildern des Untersuchungsbereichs des Untersuchungsobjekts auf Basis der Modifikationen mittels eines generativen Modells, wobei jedes synthetische Bild eine Vielzahl an Bildelementen umfasst, wobei jedes Bildelement der Vielzahl an Bildelementen einen Teilbereich des Untersuchungsbereichs repräsentiert, wobei jedem Bildelement mindestens ein Farbwert zugeordnet ist,
   - Ermitteln eines Streuungsmaßes der Farbwerte korrespondierender Bildelemente der erzeugten synthetischen Bilder, wobei miteinander korrespondierende Bildelemente denselben Teilbereich des Untersuchungsbereichs repräsentieren,
   - Ermitteln mindestens eines Vertrauenswertes auf Basis des ermittelten Streuungsmaßes,
   - Ausgeben des mindestens einen Vertrauenswertes.

Ein weiterer Gegenstand der vorliegenden Offenbarung ist ein computerlesbares Speichermedium umfassend ein Computerprogramm, das in einen Arbeitsspeicher eines Computersystems geladen werden kann und dort das Computersystem dazu veranlasst, folgende Schritte ausführen:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an unterschiedlichen Modifikationen des mindestens einen empfangenen Bildes,
- Erzeugen einer Mehrzahl an synthetischen Bildern des Untersuchungsbereichs des Untersuchungsobjekts auf Basis der Modifikationen mittels eines generativen Modells, wobei jedes synthetische Bild eine Vielzahl an Bildelementen umfasst, wobei jedes Bildelement der Vielzahl an Bildelementen einen Teilbereich des Untersuchungsbereichs repräsentiert, wobei jedem Bildelement mindestens ein Farbwert zugeordnet ist,
- Ermitteln eines Streuungsmaßes der Farbwerte korrespondierender Bildelemente der erzeugten synthetischen Bilder, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

### KURZE BESCHREIBUNG DER ZEICHNUNGEN

Fig. 1 zeigt beispielhaft und schematisch die Erzeugung von Modifikationen von empfangenen Bildern, die Erzeugung einer Mehrzahl an synthetischen Bildern auf Basis der Modifikationen mit Hilfe eines generativen Modells und die Erzeugung eines vereinten synthetischen Bildes auf Basis der Mehrzahl an synthetischen Bildern.
Fig. 2 zeigt beispielhaft und schematisch das Kombinieren von synthetischen Bildern zu einem vereinten synthetischen Bild.
Fig. 3 zeigt beispielhaft und schematisch das Ermitteln des mindestens einen Vertrauenswertes und das Erzeugen einer Vertrauensrepräsentation.
Fig. 4 zeigt eine Ausführungsform des Verfahrens der vorliegenden Offenbarung in Form eines Ablaufschemas.
Fig. 5 zeigt beispielhaft und schematisch ein Verfahren zum Trainieren eines Modells des maschinellen Lernens.
Fig. 6 zeigt beispielhaft und schematisch ein Computersystem gemäß der vorliegenden Offenbarung.
Fig. 7 zeigt beispielhaft und schematisch eine weitere Ausführungsform des Computersystems der vorliegenden Offenbarung.

### AUSFÜHRLICHE BESCHREIBUNG

Die Erfindung wird im Folgenden näher erläutert, ohne zwischen den Gegenständen der vorliegenden Offenbarung (Verfahren, Computersystem, computerlesbares Speichermedium) zu unterscheiden. Vielmehr sollen die nachfolgenden Ausführungen sinngemäß für alle Gegenstände der Erfindung gelten, unabhängig davon, in welchem Zusammenhang (Verfahren, Computersystem, computerlesbares Speichermedium) sie beschrieben werden.

Wenn in der vorliegenden Beschreibung oder in den Ansprüchen Schritte in einer Reihenfolge angegeben sind, bedeutet dies nicht unbedingt, dass die Erfindung auf die angegebene Reihenfolge beschränkt ist. Vielmehr ist es denkbar, dass die Schritte auch in einer anderen Reihenfolge oder auch parallel zueinander ausgeführt werden können, es sei denn, ein Schritt baut auf einem anderen auf, was zwingend erfordert, dass der aufbauende Schritt anschließend ausgeführt wird (dies wird aber im Einzelfall klar). Die genannten Reihenfolgen sind somit bevorzugte Ausführungsformen der vorliegenden Offenbarung.

Die Erfindung wird an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die Erfindung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Die vorliegende Offenbarung beschreibt Mittel zum Beurteilen der Vertrauenswürdigkeit eines synthetischen Bildes eines Untersuchungsbereichs eines Untersuchungsobjekts.

Unter dem Begriff "Vertrauenswürdigkeit" wird verstanden, dass eine Person, die das synthetische Bild begutachtet, darauf vertrauen kann, dass Strukturen und/oder Morphologien und/oder Texturen, die in dem synthetischen Bild dargestellt sind, auf reale Strukturen und/oder reale Morphologien und/oder reale Texturen des Untersuchungsbereichs des Untersuchungsobjekts zurückgeführt werden können und keine Artefakte sind.

Der Begriff "synthetisch" bedeutet, dass das synthetische Bild nicht das unmittelbare Ergebnis einer Messung an einem realen Untersuchungsobjekt ist, sondern künstlich erzeugt (berechnet) wurde. Dabei kann ein synthetisches Bild jedoch auf Bildaufnahmen eines realen Untersuchungsobjekts basieren, d.h. es können ein oder mehrere Bildaufnahmen eines realen Untersuchungsobjekts verwendet werden, um das synthetische Bild zu erzeugen. In der Einleitung und in der weiteren Beschreibung der vorliegenden Offenbarung sind Beispiele für synthetische Bilder beschrieben.

Das "Untersuchungsobjekt" ist vorzugsweise ein Mensch oder ein Tier, vorzugsweise ein Säugetier, ganz besonders bevorzugt ein Mensch.

Der "Untersuchungsbereich" ist ein Teil des Untersuchungsobjekts, zum Beispiel ein Organ eines Menschen oder Tieres wie beispielsweise die Leber, das Gehirn, das Herz, die Niere, die Lunge, der Magen, der Darm, die Bauchspeicheldrüse, die Schilddrüse, die Prostata, die Brust oder ein Teil der genannten Organe oder mehrere Organe oder ein anderer Teil des Untersuchungsobjekts. Der Untersuchungsbereich kann auch mehre Organe und/oder Teile von mehreren Organen umfassen.

In einer Ausführungsform umfasst der Untersuchungsbereich eine Leber oder einen Teil einer Leber oder der Untersuchungsbereich ist eine Leber oder ein Teil einer Leber eines Säugetiers, vorzugsweise eines Menschen.

In einer weiteren Ausführungsform umfasst der Untersuchungsbereich ein Gehirn oder einen Teil eines Gehirns oder der Untersuchungsbereich ist ein Gehirn oder ein Teil eines Gehirns eines Säugetiers, vorzugsweise eines Menschen.

In einer weiteren Ausführungsform umfasst der Untersuchungsbereich ein Herz oder ein Teil eines Herzes oder der Untersuchungsbereich ist ein Herz oder ein Teil eines Herzes eines Säugetiers, vorzugsweise eines Menschen.

In einer weiteren Ausführungsform umfasst der Untersuchungsbereich einen Thorax oder einen Teil eines Thorax oder der Untersuchungsbereich ist ein Thorax oder ein Teil eines Thorax eines Säugetiers, vorzugsweise eines Menschen.

In einer weiteren Ausführungsform umfasst der Untersuchungsbereich einen Magen oder einen Teil eines Magens oder der Untersuchungsbereich ist ein Magen oder ein Teil eines Magens eines Säugetiers, vorzugsweise eines Menschen.

In einer weiteren Ausführungsform umfasst der Untersuchungsbereich eine Bauchspeicheldrüse oder einen Teil einer Bauchspeicheldrüse oder der Untersuchungsbereich ist eine Bauchspeicheldrüse oder ein Teil einer Bauchspeicheldrüse eines Säugetiers, vorzugsweise eines Menschen.

In einer weiteren Ausführungsform umfasst der Untersuchungsbereich eine Niere oder einen Teil einer Niere oder der Untersuchungsbereich ist eine Niere oder ein Teil einer Niere eines Säugetiers, vorzugsweise eines Menschen.

In einer weiteren Ausführungsform umfasst der Untersuchungsbereich einen oder beide Lungenflügel oder einen Teil eines Lungenflügels Säugetiers, vorzugsweise eines Menschen.

In einer weiteren Ausführungsform umfasst der Untersuchungsbereich eine Brust oder einen Teil einer Brust oder der Untersuchungsbereich ist eine Brust oder ein Teil einer Brust eines weiblichen Säugetiers, vorzugsweise eines weiblichen Menschen.

In einer weiteren Ausführungsform umfasst der Untersuchungsbereich eine Prostata oder einen Teil einer Prostata oder der Untersuchungsbereich ist eine Prostata oder ein Teil einer Prostata eines männlichen Säugetiers, vorzugsweise eines männlichen Menschen.

Der Untersuchungsbereich, auch Aufnahmevolumen (engl.: *field of view,* FOV) genannt, stellt insbesondere ein Volumen dar, welches in radiologischen Aufnahmen abgebildet wird. Der Untersuchungsbereich wird typischerweise durch einen Radiologen, beispielsweise auf einer Übersichtsaufnahme festgelegt. Selbstverständlich kann der Untersuchungsbereich alternativ oder zusätzlich auch automatisch, beispielsweise auf Grundlage eines ausgewählten Protokolls, festgelegt werden.

Der Begriff "Bild" bezeichnet eine Datenstruktur, die eine räumliche Verteilung eines physikalischen Signals darstellt. Die räumliche Verteilung kann eine beliebige Dimension haben, z.B. 2D, 3D, 4D oder eine höhere Dimension. Die räumliche Verteilung kann eine beliebige Form haben, z.B. ein Gitter bilden und dadurch Pixel oder Voxel definieren, wobei das Gitter unregelmäßig oder regelmäßig sein kann. Das physikalische Signal kann ein beliebiges Signal sein, z.B. Protonendichte, Echogenität, Durchlässigkeit, Absorptionsvermögen, Relaxivität, Informationen über rotierende Wasserstoffkerne in einem Magnetfeld, Farbe, Graustufe, Tiefe, Oberflächen- oder Volumenbelegung.

Unter dem Begriff "Bild" wird vorzugsweise eine zwei-, drei- oder höherdimensionale visuell erfassbare Repräsentation des Untersuchungsbereichs des Untersuchungsobjekts verstanden. Üblicherweise handelt es sich bei dem empfangenen Bild um ein digitales Bild. Der Begriff "digital" bedeutet, dass das Bild von einer Maschine, in der Regel einem Computersystem, verarbeitet werden kann. Unter "Verarbeitung" werden die bekannten Verfahren zur elektronischen Datenverarbeitung (EDV) verstanden.

Ein digitales Bild kann mit Computersystemen und Software verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bilder können mit geeigneten Anzeigegeräten visualisiert werden, wie zum Beispiel mit Computermonitoren, Projektoren und/oder Druckern.

In einem digitalen Bild werden Bildinhalte üblicherweise durch ganze Zahlen repräsentiert und gespeichert. In den meisten Fällen handelt es sich um zwei- oder dreidimensionale Bilder, die binär kodiert und gegebenenfalls komprimiert sein können. Bei den digitalen Bildern handelt es sich üblicherweise um Rastergrafiken, bei denen die Bildinformation in einer gleichmäßigen Rasterung abgelegt ist. Rastergrafiken bestehen aus einer rasterförmigen Anordnung von so genannten Bildpunkten (Pixel) im Fall von zweidimensionalen Darstellungen oder Volumenelementen (Voxel) im Fall dreidimensionaler Darstellungen. Bei vierdimensionalen Darstellungen wird häufig der Begriff Doxel *(dynamic voxel)* für die Bildelemente verwendet. Bei höherdimensionalen Darstellungen oder allgemein wird im Englischen manchmal auch der Begriff "n-xel" verwendet, wobi n die jeweilige Dimension angibt. In dieser Offenbarung wird allgemein der Begriff Bildelement verwendet. Ein Bildelement kann also ein Bildpunkt (Pixel) im Fall einer zweidimensionalen Darstellung, ein Volumenelement (Voxel) im Fall einer dreidimensionalen Darstellung, ein dynamisches Voxel (Doxel) im Fall der vierdimensionalen Darstellung oder ein höherdimensionales Bildelement im Fall einer höherdimensionalen Darstellung sein.

Jedem Bildelement eines Bildes ist ein Farbwert zugeordnet. Der Farbwert gibt an, wie (z.B. in welcher Farbe) das Bildelement visuell dargestellt werden soll (z.B. auf einem Monitor).

Der einfachste Fall ist ein Binärbild, bei dem ein Bildelement entweder weiß oder schwarz dargestellt wird. Üblicherweise steht der Farbwert "0" für "schwarz" und der Farbwert "1" für "weiß".

Bei einem Graustufenbild ist jedem Bildelement eine Graustufe zugeordnet, die von schwarz über eine definierte Zahl von Grauabstufungen bis weiß reicht. Die Graustufen werden auch als Grauwerte bezeichnet. Die Zahl der Abstufungen kann beispielsweise von 0 bis 255 reichen (also 256 Graustufen/Grauwerte umfassen), wobei auch hier der Wert "0" üblicherweise für "schwarz" steht und der höchste Grauwert (in dem vorliegenden Beispiel der Wert 255) für "weiß" steht.

Bei einem Farbbild definiert sich die für ein Bildelement verwendete Kodierung der Farbe unter anderem über den Farbraum und die Farbtiefe. Bei einem Bild, dessen Farbe über den so genannten RGB-Farbraum definiert ist (RGB steht für die Grundfarben Rot, Grün und Blau), sind jedem Bildpunkt drei Farbwerte zugeordnet, ein Farbwert für die Farbe Rot, ein Farbwert für die Farbe Grün und ein Farbwert für die Farbe Blau. Die Farbe eines Bildelements ergibt sich durch Überlagerung (additives Mischen) der drei Farbwerte. Der einzelne Farbwert kann z.B. in 256 unterscheidbare Stufen diskretisiert sein, die Tonwerte genannt werden und üblicherweise von 0 bis 255 reichen. Der Tonwert "0" eines jeden Farbkanals ist üblicherweise die dunkelste Farbnuance. Haben alle drei Farbkanäle den Tonwert 0, erscheint das entsprechende Bildelement schwarz; haben alle drei Farbkanäle den Tonwert 255, erscheint das entsprechende Bildelement weiß.

Unabhängig davon, ob es sich um ein Binärbild, ein Graustufenbild oder ein Farbbild handelt, wird in dieser Offenbarung der Begriff "Farbwert" für die Information verwendet, in welcher Farbe (inkl. den "Farben" "schwarz" und "weiß" sowie allen Grautönen) ein Bildelement dargestellt werden soll. Ein Farbwert kann also ein Tonwert eines Farbkanals sein, ein Grauton sein oder für "schwarz" oder für "weiß" stehen.

Ein Farbwert in einem Bild (insbesondere einer medizinischen Aufnahme) repräsentiert üblicherweise eine Stärke eine physikalischen Signals (s.o.). Es sei angemerkt, dass der "Farbwert" auch ein Wert für das physikalische Signal selbst sein kann.

Es gibt eine Vielzahl an möglichen digitalen Bildformaten und Farbkodierungen. Vereinfachend wird in dieser Beschreibung davon ausgegangen, dass die vorliegenden Bilder Rastergrafiken mit einer spezifischen Zahl an Bildelementen sind. Diese Annahme soll jedoch in keiner Weise limitierend verstanden werden. Dem Fachmann der Bildbearbeitung ist klar, wie er die Lehre dieser Beschreibung auf Bilddateien, die in anderen Bildformaten vorliegen und/oder bei denen die Farbwerte anders kodiert sind, übertragen kann.

Bei einem "Bild" im Sinne der vorliegenden Offenbarung kann es sich auch um einen oder mehrere Ausschnitte aus einer Videosequenz handeln.

In einem ersten Schritt wird mindestens ein Bild eines Untersuchungsbereichs eines Untersuchungsobjekts empfangen.

Der Begriff "Empfangen" umfasst sowohl das Abrufen von Bildern als auch das Entgegennehmen von Bildern, die z.B. an das Computersystem der vorliegenden Offenbarung übermittelt werden. Das mindestens eine Bild kann von einem Computertomografen, von einem Magnetresonanztomografen, von einem Ultraschall-Scanner, von einer Kamera und/oder von einem anderen Gerät zur Erzeugung von Bildern empfangen werden. Das mindestens eine Bild kann aus einem Datenspeicher ausgelesen und/oder von einem separaten Computersystem übermittelt werden.

Vorzugsweise handelt es sich bei dem mindestens einen empfangenen Bild um eine zweidimensionale oder dreidimensionale Repräsentation eines Untersuchungsbereichs eines Untersuchungsobjekts.

In einer Ausführungsform der vorliegenden Offenbarung handelt es sich bei dem mindestens einen empfangenen Bild um eine medizinische Aufnahme.

Eine "medizinische Aufnahme" ist eine visuelle Repräsentation eines Untersuchungsbereichs eines Menschen oder eines Tieres, die für diagnostische und/oder therapeutische Zwecke verwendet werden kann.

Es gibt eine Vielzahl an Techniken, mit denen medizinische Aufnahmen erzeugt werden können; Beispiele solcher Techniken sind Röntgen, Computertomografie (CT), Fluoroskopie, Magnetresonanztomografie (MRT), Ultraschall (Sonografie), Endoskopie, Elastografie, taktile Bildgebung, Thermografie, Mikroskopie, Positronenemissionstomografie, optische Kohärenztomografie (OCT), Fundusfotografie und andere.

Beispiele für medizinische Aufnahmen sind CT-Aufnahmen, Röntgenbilder, MRT-Aufnahmen, Fluoreszenzangiografie-Bilder, OCT-Aufnahmen, histologische Aufnahmen, Ultraschallbilder, Fundusbilder und/oder andere.

Das mindestens eine empfangene Bild kann eine CT-Aufnahme, MRT-Aufnahme, Ultraschallaufnahme, OCT-Aufnahme, und/oder eine andere Repräsentation eines Untersuchungsbereichs eines Untersuchungsobjekts sein.

Das mindestens eine empfangene Bild kann auch Repräsentationen unterschiedlicher Modalitäten umfassen, z.B. eine CT-Aufnahme und eine MRT-Aufnahme.

Jedes empfangene Bild umfasst eine Vielzahl an Bildelementen. Jedes Bildelement der Vielzahl an Bildelementen repräsentiert einen Teilbereich des Untersuchungsbereichs des Untersuchungsobjekts. Der Begriff "Vielzahl an Bildelementen" bedeutet mindestens 1000, vorzugsweise mindestens 10000, noch mehr bevorzugt mehr als 100000. Es ist denkbar, dass ein empfangenes Bild ein oder mehrere Bildelemente umfasst, die nicht den Untersuchungsbereich des Untersuchungsobjekts repräsentieren, sondern einen anderen Bereich wie beispielsweise einen angrenzenden und/oder umgebenden Bereich.

Von dem mindestens einen empfangenen Bild wird eine Mehrzahl an unterschiedlichen Modifikationen erzeugt. Der Begriff "Mehrzahl an unterschiedlichen Modifikationen" bedeutet mindestens zwei, vorzugsweise mindestens fünf, noch mehr bevorzugt mindestens zehn unterschiedliche Modifikationen.

Der Begriff "unterschiedlich" bedeutet, dass die Mehrzahl an Modifikationen keine Modifikationen umfasst, die identisch sind. Mit anderen Worten: zwei willkürlich aus der Mehrzahl der unterschiedlichen Modifikationen herausgegriffene Modifikationen sind niemals identisch, sondern unterscheiden sich voneinander.

Unter dem Begriff "Modifikation des mindestens einen Bildes" wird eine Variante des mindestens einen Bildes und/oder ein verändertes Bild und/oder eine Variation des mindestens einen Bildes verstanden. Eine Modifikation des mindestens einen Bildes wird auf Basis des mindestens einen Bildes erzeugt.

Eine Modifikation eines Bildes ist ein "Bild" im Sinne der vorliegenden Offenbarung.

Die Modifikation des mindestens einen Bildes erfolgt durch Augmentieren (engl. *image augmentation*).

Augmentieren ist eine Technik, die beim Trainieren von Modellen des maschinellen Lernens insbesondere dann eingesetzt werden kann, wenn zu wenig Trainingsdaten vorliegen. Der Trainingsdatensatz kann vergrößert werden, indem die Originaldaten auf verschiedene Weisen verändert werden. Die Qualität (z.B. die Vorhersagegenauigkeit) des Modells desmaschinellen Lernens kann durch den vergrößerten Trainingsdatensatz gesteigert werden (siehe z.B. S. Yang et al.: Image Data Augmentation for Deep Learning: A Survey, arXiv:2204.08610v1).

Im vorliegenden Fall verfolgt das Augmentieren nicht den Zweck, einen Trainingsdatensatz des generativen Modells zu vergrößern, sondern unterschiedliche Eingabedaten für das generative Modell bei der Nutzung des generativen Models (engl. *inference*) zu erzeugen. Die unterschiedlichen Eingabedaten können dem generativen Modell separat voneinander zugeführt werden und das generative Modell erzeugt auf Basis jedes Satzes an unterschiedlichen Eingabedaten ein synthetisches Bild als Ausgabedaten. Durch Vergleich der erzeugten synthetischen Bilder kann ermittelt werden, wie robust das generative Modell gegenüber veränderten Eingabedaten ist. Durch Vergleich der erzeugten synthetischen Bilder kann wie in dieser Offenbarung beschrieben mindestens ein Vertrauenswert ermittelt werden.

Es gibt eine Vielzahl an Techniken zum Augmentieren von Bildern. Einige Beispiele sind nachfolgend aufgeführt.

Aus dem mindestens einen Bild können unterschiedliche Modifikationen beispielsweise durch eine oder mehrere geometrische Transformationen erzeugt werden. Beispiele für geometrische Transformationen sind starre Transformationen, nicht-starre Transformationen, affine Transformationen und nicht-affine Transformationen.

Bei einer starren Transformation wird die Größe oder Form des Bildes nicht verändert. Beispiele für starre Transformationen sind Reflexion, Rotation und Translation.

Eine nicht starre Transformation kann die Größe oder Form oder sowohl Größe als auch Form des Bildes verändern. Beispiele für nicht starre Transformationen sind Dilatation und Scherung.

Eine affine Transformation ist eine geometrische Transformation, bei der Linien und Parallelität erhalten bleiben, aber nicht unbedingt Abstände und Winkel. Beispiele für affine Transformationen sind Translation, Skalierung, Homothetie, Ähnlichkeit, Reflexion, Rotation, Scherabbildung und deren Zusammensetzungen in beliebiger Kombination und Reihenfolge.

Modifikationen des mindestens einen empfangenen Bildes können beispielsweise durch Variation der Farbwerte erzeugt werden. Die Farbwerte einer vordefinierten Zahl an Bildelementen können um einen vordefinierten Wert verkleinert oder vergrößert werden, die Farbwerte von Farbkanälen können vertauscht werden, Farbwerte können in Grauwerte umgewandelt werden. Weitere Änderungen von Farbwerten sind denkbar.

Modifikationen des mindestens einen empfangenen Bildes können dadurch erzeugt werden, dass die Farbwerte einer vordefinierten Zahl an Bildelementen durch Rauschen ersetzt werden und/oder dass die Farbwerte auf Null gesetzt werden.

Modifikationen des mindestens einen empfangenen Bildes können dadurch erzeugt werden, dass die Farbwerte einer vordefinierten Zahl an zusammenhängenden Bildelementen auf Null gesetzt werden.

Modifikationen des mindestens einen empfangenen Bildes können dadurch erzeugt werden, dass die Schärfe und/oder der Kontrast des mindestens einen Bildes variiert werden.

Wird mehr als ein Bild empfangen, können Modifikationen dadurch erzeugt werden, dass teilweise Mischungen erzeugt werden; so können beispielsweise die Farbwerte einer vordefinierten Zahl an Bildelementen eines empfangenen Bildes durch Farbwerte korrespondierender Bildelemente eines anderen empfangen Bildes ersetzt werden.

Kombinationen von mehreren Augmentierungstechniken sind möglich. Die hier genannten und weitere Augmentierungstechniken sind in zahlreichen Publikationen beschrieben (siehe z.B. M. Xu et al.: A Comprehensive Survey of Image Augmentation Techniques for Deep Learning, arXiv:2205.01491v2; S. Yang et al.: Image Data Augmentation for Deep Learning: A Survey, arXiv:2204.08610v1; D. Itzkovich et al.: Using Augmentation to Improve the Robustness to Rotation of Deep Learning Segmentation in Robotic-Assisted Surgical Data, 2019 International Conference on Robotics and Automation (ICRA), Montreal, QC, Canada, 2019, pp. 5068-5075; E. Castro et al.: Elastic deformations for data augmentation in breast cancer mass detection, 2018 IEEE EMBS International Conference on Biomedical Health Informatics (BHI), pp. 230-234, 2018; Y.-J. Cha et al.: Autonomous Structural Visual Inspection Using Region-Based Deep Learning for Detecting Multiple Damage Types, Computer-Aided Civil and Infrastructure Engineering, 00, 1-17. 10.1111/mice.12334; S. Wang et al.: Multiple Sclerosis Identification by 14-Layer Convolutional Neural Network With Batch Normalization, Dropout, and Stochastic Pooling, Frontiers in Neuroscience, 12. 818. 10.3389/fnins.2018.00818; Z. Wang et al.: CNN Training with Twenty Samples for Crack Detection via Data Augmentation, Sensors 2020, 20, 4849; B. Hu et al.: A Preliminary Study on Data Augmentation of Deep Learning for Image Classification, Computer Vision and Pattern Recognition; Machine Learning (cs.LG); Image and Video Processing (eess.IV), arXiv:1906.11887; R. Takahashi et al.: Data Augmentation using Random Image Cropping and Patching for Deep CNNs, Journal of Latex Class Files, Vol. 14, No. 8, 2015, arXiv:1811.09030; T. DeVries and G. W. Taylor: Improved Regularization of Convolutional Neural Networks with Cutout, arXiv:1708.04552, 2017.; Z. Zhong et al.: Random Erasing Data Augmentation, arXiv:1708.04896, 2017.

Jede Modifikation wird in einem nächsten Schritt einem generativen Modell zugeführt.

Das generative Modell ist konfiguriert, auf Basis des mindestens einen empfangenen Bildes des Untersuchungsbereichs des Untersuchungsobjekts ein synthetisches Bild des Untersuchungsbereichs des Untersuchungsobjekts zu erzeugen.

Das generative Modell kann ein trainiertes Modell des maschinellen Lernens sein. Ein "Modell des maschinellen Lernens" kann als eine computerimplementierte Datenverarbeitungsarchitektur verstanden werden. Ein solches Modell kann Eingabedaten empfangen und Ausgabedaten auf der Grundlage dieser Eingabedaten und Modellparametern liefern. Ein solches Modell kann durch Training eine Beziehung zwischen den Eingabedaten und den Ausgabedaten erlernen. Beim Training können Modellparameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten verglichen. Modellparameter werden so verändert, dass die Abweichungen zwischen den Ausgabedaten und den Zieldaten auf ein (definiertes) Minimum reduziert werden. Zur Modifizierung der Modellparameter im Hinblick auf eine Reduzierung der Abweichungen kann ein Optimierungsverfahren wie beispielsweise ein Gradientenverfahren verwendet werden.

Die Abweichungen können mit Hilfe einer Fehlerfunktion (engl.: *loss function*) quantifiziert werden. Eine solche Fehlerfunktion kann verwendet werden, um einen Fehler (engl.: *loss*) für ein gegebenes Paar von Ausgabedaten und Zieldaten zu berechnen. Das Ziel des Trainingsprozesses kann darin bestehen, die Parameter des Modells des maschinellen Lernens so zu verändern (anzupassen), dass der Fehler für alle Paare des Trainingsdatensatzes auf ein (definiertes) Minimum reduziert wird.

Handelt es sich bei den Ausgabedaten und den Zieldaten beispielsweise um Zahlen, kann die Fehlerfunktion die absolute Differenz zwischen diesen Zahlen sein. In diesem Fall kann ein hoher absoluter Fehler bedeuten, dass ein oder mehrere Modellparameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder eine andere Art von Differenzmetrik zweier Vektoren als Fehlerfunktion gewählt werden.

Bei höherdimensionalen Ausgaben, wie z.B. zweidimensionalen, dreidimensionalen oder höherdimensionalen Ausgaben, kann z.B. eine elementweise Differenzmetrik verwendet werden. Alternativ oder zusätzlich können die Ausgabedaten vor der Berechnung eines Fehlerwertes transformiert werden, z.B. in einen eindimensionalen Vektor.

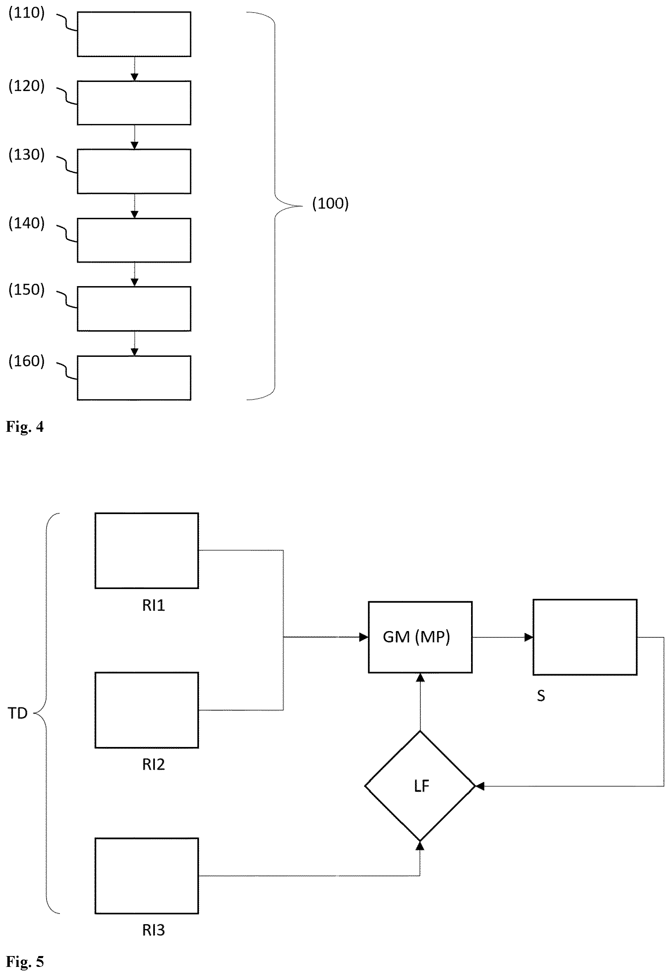

Fig. 5 zeigt schematisch ein Beispiel für das Trainieren eines Modells des maschinellen Lernen und ist weiter unten näher beschrieben.

Das generative Modell kann ein Modell des maschinellen Lernens sein, wie es beispielsweise in einer der folgenden Publikationen beschrieben ist: WO2019/074938A1, WO2022/253687A1, WO2022/207443A1, WO2022/223383A1, WO20227184297A1, WO2022/179896A2, WO2021/069338A1, EP 22209510.1, EP23159288.2, PCT/EP2023/053324, PCT/EP2023/050207, CN110852993A, CN110853738A, US2021150671A1, arXiv:2303.15938v1, doi:10.1093/jrr/rrz030.

Das generative Modell kann einen oder mehrere Algorithmen umfassen, die angeben, wie das synthetische Bild auf Basis des mindestens einen empfangenen Bildes erzeugt werden kann. Üblicherweise wird das mindestens eine empfangene Bild dem generativen Modell zugeführt und das Modell erzeugt auf Basis des zugeführten mindestens einen Bildes, Modellparametern und gegebenenfalls weiteren Eingabedaten das synthetische Bild (siehe z.B. WO2019/074938A1, WO2022184297A1, WO2021052896A1, PCT/EP2023/053324).

Das mindestens eine empfangene Bild kann beispielsweise eine radiologische Aufnahme des Untersuchungsbereichs ohne Kontrastmittel und/oder mit einer geringeren Menge an Kontrastmittel als die Standardmenge des Kontrastmittels umfassen, und das synthetische Bild kann eine synthetische radiologische Aufnahme des Untersuchungsbereichs nach der Applikation der Standardmenge an Kontrastmittel sein (wie z.B. beschrieben in WO2019/074938A1 oder WO2022184297A1). Die "Standardmenge" ist üblicherweise die vom Hersteller und/oder Vertreiber des Kontrastmittels empfohlene und/oder die von einer Zulassungsbehörde zugelassene und/oder die in einem Beipackzettel zum Kontrastmittel aufgeführte Menge. Das generative Modell ist in einem solchen Fall also konfiguriert, auf Basis mindestens einer radiologischen Aufnahme des Untersuchungsbereichs vor und/oder nach einer Applikation einer ersten Menge eines Kontrastmittels, eine synthetische radiologische Aufnahme nach der Applikation einer zweiten Menge des Kontrastmittels zu erzeugen, wobei die zweite Menge vorzugsweise größer als die erste Menge ist (wie z.B. beschrieben in WO2019/074938A1 oder WO2022184297A1). Die mindestens eine empfangene radiologische Aufnahme kann beispielsweise eine MRT-Aufnahme sein, und die synthetische radiologische Aufnahme kann eine synthetische MRT-Aufnahme sein.

Das mindestens eine empfangene Bild kann auch eine CT-Aufnahme vor und/oder nach der Applikation einer ersten Menge eines MRT-Kontrastmittels umfassen, und das synthetische Bild kann eine synthetische CT-Aufnahme nach der Applikation einer zweiten Menge eines MRT-Kontrastmittels sein, wobei die zweite Menge vorzugsweise größer als die erste Menge und vorzugsweise größer als die Standardmenge des MRT-Kontrastmittels für MRT-Untersuchungen ist (wie z.B. beschrieben in PCT/EP2023/053324).

Das mindestens eine empfangene Bild kann beispielsweise eine oder mehrere radiologische Aufnahmen des Untersuchungsbereichs in einer ersten Zeitspanne vor/und oder nach der Applikation eines Kontrastmittels umfassen, und das synthetische Bild kann eine synthetische radiologische Aufnahme des Untersuchungsbereichs in einer zweiten Zeitspanne nach der Applikation des Kontrastmittels sein (wie z.B. beschrieben in WO2021052896A1). Das generative Modell kann also konfiguriert sein, auf Basis mindestens einer radiologischen Aufnahme des Untersuchungsbereichs in einer ersten Zeitspanne vor und/oder nach der Applikation eines Kontrastmittels eine synthetische radiologische Aufnahme des Untersuchungsbereichs in einer zweiten Zeitspanne nach der Applikation des Kontrastmittels zu erzeugen, wobei die zweite Zeitspanne vorzugsweise chronologisch auf die ersten Zeitspanne folgt (wie z.B. beschrieben in WO2021052896A1).

Im Gegensatz zu den Verfahren, die in den oben zitierten Publikationen beschrieben sind, wird im Fall der vorliegenden Offenbarung dem generativen Modell jedoch nicht (nur) das mindestens eine empfangene Bild zugeführt; es werden dem generativen Modell (auch) Modifikationen des mindestens einen empfangenen Bildes zugeführt.

Ist das generative Modell konfiguriert, auf Basis eines einzigen empfangenen Bildes ein synthetisches Bild zu erzeugen, werden von dem empfangenen Bild Modifikationen erzeugt und jede Modifikation wird separat dem generativen Modell zugeführt. Das generative Modell erzeugt dann auf Basis jeder zugeführten Modifikation jeweils ein synthetisches Bild. Neben jeder Modifikation des empfangenen Bildes kann dem generativen Modell natürlich auch das empfangene Bild selbst zugeführt werden, auf dessen Basis das generative Modell dann ein weiteres synthetisches Bild erzeugt. Jedes empfangene Bild selbst kann also ebenfalls eine Modifikation sein.

Ist das generative Modell konfiguriert, auf Basis von zwei empfangenen Bildern (einem ersten Bild und einem zweiten Bild) ein synthetisches Bild zu erzeugen, dann wird von jedem Bild (von dem ersten Bild und von dem zweiten Bild) eine Mehrzahl von Modifikationen erzeugt. Dem generativen Modell werden dann die Modifikationen des ersten Bildes und des zweiten Bildes zugeführt, und zwar jeweils eine Modifikation des ersten Bildes und eine Modifikation des zweiten Bildes (also in Form von Paaren). Das generative Modell erzeugt aus jedem Paar einer Modifikation des ersten Bilds und einer Modifikation des zweiten Bildes ein synthetisches Bild. Neben Paaren von Modifikation des ersten und des zweiten Bildes können dem generativen Modell natürlich auch das erste und das zweite Bild zugeführt werden, auf deren Basis das generative Modell dann ein weiteres synthetisches Bild erzeugt.

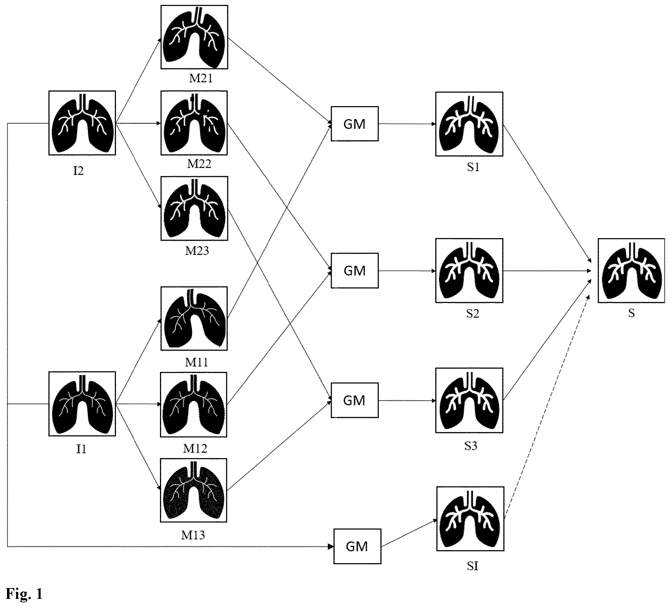

Ist das generative Modell konfiguriert, auf Basis von *m* empfangenen Bildern (wobei *m* eine ganze positive Zahl ist), ein synthetisches Bild zu erzeugen, wird üblicherweise von jedem der *m* empfangenen Bilder eine Zahl *p* an Modifikationen erzeugt, insgesamt *m·p* Modifikationen, wobei *p* eine ganze positive Zahl ist. Dem generativen Modell können dann die *m·p* Modifikationen der *m* empfangenen Bilder zugeführt werden, und zwar in Sätzen von jeweils einer Modifikation jedes der *m* Bilder (d.h., es gibt üblicherweise *p* Sätze und jeder Satz umfasst üblicherweise *m* Modifikationen). Das generative Modell erzeugt aus jedem Satz ein synthetisches Bild. Es werden also üblicherweise *p* synthetische Bilder erzeugt. Wird auch auf Basis der *m* empfangenen Bilder ein synthetisches Bild erzeugt, wird üblicherweise eine Zahl (*p+*1) an synthetischen Bilder erzeugt. Es können noch weitere synthetische Bilder erzeugt werden, wie z.B. in Bezug zu Fig. 1 beschrieben.

Jedes der erzeugten synthetischen Bilder kann ausgegeben (z.B. auf einem Monitor angezeigt und/oder auf einem Drucker ausgedruckt), in einem Datenspeicher gespeichert und/oder an ein separates Computersystem z.B. über ein Netzwerk übermittelt werden.

Die erzeugten synthetischen Bilder können in einem weiteren Schritt zu einem einzigen synthetischen Bild kombiniert werden. Ein solches, durch Kombinieren von synthetischen Bildern erzeugtes synthetisches Bild wird in dieser Offenbarung auch als vereintes synthetisches Bild bezeichnet. Das vereinte synthetische Bild kann z.B. ein Durchschnittsbild aller erzeugten synthetischen Bilder sein.

Das vereinte synthetische Bild kann auf Basis von korrespondierenden Bildelementen der erzeugten synthetischen Bilder erzeugt werden.

Jedes empfangene Bild umfasst eine Vielzahl an Bildelementen. Jedes Bildelement der Vielzahl an Bildelementen repräsentiert einen Teilbereich des Untersuchungsbereichs des Untersuchungsobjekts.

Ebenso umfasst auch jede Modifikation eines empfangenen Bildes eine Vielzahl an Bildelementen. Üblicherweise repräsentiert jedes Bildelement einer Modifikation einen Teilbereich des Untersuchungsbereich des Untersuchungsobjekts. Es ist jedoch auch möglich, dass eine Modifikation Bildelemente aufweist, die keinen Teilbereich eines Untersuchungsbereichs repräsentiert. Solche Bildelemente können beispielsweise das Ergebnis von Padding sein, das beim Augmentieren angewandt wurde. Ein Großteil der Bildelemente jeder Modifikation repräsentiert jedoch einen Teilbereich des Untersuchungsbereichs. Die Zahl der Bildelemente einer Modifikation ist üblicherweise gleich der Zahl der Bildelemente des empfangenen Bildes, aus dem die Modifikation erzeugt wurde; zumindest liegt sie üblicherweise in der gleichen Größenordnung.

Ebenso umfasst auch jedes synthetische Bild des Untersuchungsbereichs des Untersuchungsobjekts eine Vielzahl an Bildelementen. Üblicherweise repräsentiert jedes Bildelement eines synthetischen Bildes einen Teilbereich des Untersuchungsbereichs des Untersuchungsobjekts.

Es gibt also eine Vielzahl an Teilbereichen des Untersuchungsbereichs des Untersuchungsobjekts die durch ein Bildelement (oder mehrere Bildelemente) des mindestens einen empfangenen Bildes und durch ein Bildelement (oder mehrere Bildelemente) einer jeden Modifikation und durch ein Bildelement (oder mehrere Bildelemente) des synthetischen Bildes repräsentiert werden. Vorzugsweise werden alle Teilbereiche des Untersuchungsbereichs durch ein Bildelement (oder mehrere Bildelemente) des mindestens einen empfangenen Bildes und durch ein Bildelement (oder mehrere Bildelemente) einer jeden Modifikation und durch ein Bildelement (oder mehrere Bildelemente) des synthetischen Bildes repräsentiert.

Bildelemente, die denselben Teilbereich des Untersuchungsbereichs repräsentieren, werden in dieser Offenbarung als miteinander korrespondierende Bildelemente oder kurz korrespondierende Bildelemente bezeichnet. Korrespondierende Bildelemente können beispielsweise diejenigen Bildelemente sein, die dieselben Koordinaten aufweisen, wenn es sich bei dem Bild (und/oder der Modifikation) um eine Rastergrafik handelt.

Für jedes *k*-Tupel korrespondierender Bildelemente der erzeugten synthetischen Bilder werden die Farbwerte ermittelt. Dabei gibt *k* die Zahl der miteinander korrespondierenden Bildelemente an.

Von den ermittelten Farbwerten kann ein Mittelwert (z.B. arithmetisches Mittel, geometrisches Mittel, quadratisches Mittel und/oder ein anderer Mittelwert) berechnet werden. Der Mittelwert der Farbwerte für ein Tupel korrespondierender Bildelemente kann als der Farbwert des entsprechenden Bildelements des vereinten synthetischen Bildes gesetzt werden.

Im Fall von mehreren Farbwerten (z.B. drei Farbwerten wie beim RGB-Farbmodell) kann für jeden Farbkanal ein Mittelwert gebildet werden. Der jeweilige Mittelwert kann dann als der Farbwert des entsprechenden Farbkanals des korrespondierenden Bildelements des vereinten synthetischen Bildes gesetzt werden.

Es ist auch denkbar, für korrespondierende Bildelemente keinen Mittelwert, sondern einen maximalen oder minimalen Farbwert zu ermitteln, und das vereinte synthetische Bild aus den Bildelementen mit den jeweiligen maximalen oder minimalen Farbwerten zusammenzusetzen. Anstelle der Maxima/Minima können auch andere statistische Größen ermittelt und zum Erzeugen des vereinten synthetischen Bildes verwendet werden.

Weitere Möglichkeiten, die einzelnen synthetischen Bilder zu einem vereinten synthetischen Bild zu kombinieren, sind denkbar. So kann beispielsweise ein Modell des maschinellen Lernens (z.B. ein künstliches neuronales Netzwerk) trainiert werden, das vereinte synthetische Bild nach vorgegebenen Gesichtspunkten aus den synthetischen Bildern der Mehrzahl an synthetischen Bildern zu erzeugen. Sind Trainingsdaten vorhanden, die neben synthetischen Bildern als Eingabedaten auch Bilder umfassen, die als Zieldaten verwendet werden können, kann das Modell des maschinellen Lernens in einem überwachten Lernverfahren trainiert werden, synthetische Bilder einer Mehrzahl an synthetischen Bildern zu kombinieren. Dabei können beispielsweise Aufmerksamkeitsmechanismen (engl. *attention,* siehe z.B. arXiv:2203.14263) verwendet werden, bei denen beispielsweise den einzelnen synthetischen Bildern der Mehrzahl an synthetischen Bildern unterschiedliche Gewichte bei der Kombination zu dem vereinten synthetischen Bild zugeordnet werden.

Es ist auch möglich, dass die Methode zur Erzeugung eines vereinten synthetischen Bildes nicht für jedes Tupel korrespondierender Bildelemente gleich ist. Es ist möglich, dass für verschiedene Teilbereiche des Untersuchungsobjekts verschiedene Methoden zur Erzeugung des vereinten synthetischen Bildes verwendet werden. Es ist zum Beispiel möglich, dass für Bildelemente, die ein spezifisches Gewebe und/oder ein Organ und/oder eine Läsion repräsentieren, eine andere Methode zum Kombinieren der Farbwerte der Bildelemente verwendet wird, als für Bildelemente, die ein anderes Gewebe und/oder ein anderes Organ und/oder einen anderen Teilbereich repräsentieren. Teilbereiche, für die verschiedene Vorschriften zum Kombinieren korrespondierender Bildelemente gelten, können beispielsweise mit Hilfe einer Segmentierung identifiziert werden.

Der Begriff "Segmentierung" bezieht sich auf den Prozess der Aufteilung eines Bildes in mehrere Segmente, die auch als Bildsegmente, Bildregionen oder Bildobjekte bezeichnet werden. Die Segmentierung wird in der Regel verwendet, um Objekte und Grenzen (Linien, Kurven usw.) in Bildern zu lokalisieren. In einem segmentierten Bild können die lokalisierten Objekte vom Hintergrund getrennt, visuell hervorgehoben (z.B. farbig), gemessen, gezählt oder anderweitig quantifiziert werden. Bei der Segmentierung wird jedem Bildelement eines Bildes ein Kennzeichen (z.B. eine Zahl) zugewiesen, so dass Bildelemente mit demselben Kennzeichen bestimmte gemeinsame Merkmale aufweisen, z.B. das gleiche Gewebe (z.B. Knochengewebe oder Fettgewebe oder gesundes Gewebe oder erkranktes Gewebe (z.B. Tumorgewebe) oder Muskelgewebe und/oder dergleichen) und/oder dasselbe Organ repräsentieren. Für korrespondierende Bildelemente mit einem spezifischen Kennzeichen kann dann eine spezifische Rechenvorschrift zum Kombinieren ihrer Farbwerte zur Erzeugung eines vereinten synthetischen Bildes verwendet werden; für korrespondierende Bildelemente mit einem anderen (spezifischen) Kennzeichen kann eine andere (spezifische) Rechenvorschrift zum Kombinieren ihrer Farbwerte verwendet werden.

Es ist auch möglich, dass mehr als ein vereintes synthetisches Bild erzeugt wird, z.B. zwei oder drei oder vier oder mehr als vier. Es kann zum Beispiel ein erstes vereintes synthetisches Bild mit den jeweiligen Maxima der Farbwerte erzeugt werden und ein zweites vereintes synthetisches Bild mit den jeweiligen Minima der Farbwerte. Es kann auch ein drittes vereintes synthetisches Bild mit Mittelwerten der Farbwerte erzeugt werden.

Das vereinte synthetische Bild kann ausgegeben (z.B. auf einem Monitor angezeigt und/oder auf einem Drucker ausgegeben) und/oder in einem Datenspeicher gespeichert und/oder an ein separates Computersystem z.B. über eine Netzwerkverbindung übertragen werden.

Es ist auch möglich, dass kein vereintes synthetisches Bild erzeugt und/oder ausgegeben wird. Es ist möglich, dass die nachfolgend beschriebene Analyse korrespondierender Bildelemente synthetischer Bilder ergibt, dass ein vereintes synthetisches Bild eine geringe Vertrauenswürdigkeit aufweist. Zum Beispiel kann ein ermittelter Vertrauenswert, der positiv mit der Vertrauenswürdigkeit korreliert, geringer als ein vordefinierter Grenzwert sein. Es kann sein, dass der ermittelte Vertrauenswert und damit die Vertrauenswürdigkeit so gering ist, dass auf Basis des vereinten synthetischen Bildes keine Diagnose erstellt und/oder Therapiemaßnahmen initiiert werden sollten. In einem solchen Fall kann es sein, dass ein vereintes synthetisches Bild wertlos oder sogar irreführend und damit gefährlich ist. Auf die Erzeugung und/oder Ausgabe eines solchen vereinten synthetischen Bildes mit einer geringen Vertrauenswürdigkeit kann dann verzichtet werden. Es kann ein Warnhinweis ausgegeben werden, der einen Nutzer darauf hinweist, dass auf Basis der empfangenen Bilder mittels des generativen Modells ein synthetisches Bild erzeugt wurde, das eine geringe Vertrauenswürdigkeit aufweist.

Es ist auch möglich, dass anstelle des vereinten synthetischen Bildes oder in Ergänzung zu dem vereinten synthetischen Bild ein synthetisches Bild erzeugt und ausgegeben wird, das mittels des generativen Modells auf Basis des mindestens einen empfangenen Bildes (und nicht auf Basis einer oder mehrerer Modifikationen des mindestens einen empfangen Bildes) erzeugt wurde. Es ist denkbar, dass die auf Basis der Modifikationen erzeugten synthetischen Bilder nur für den Zweck erzeugt werden, einen Vertrauenswert (oder mehrere Vertrauenswerte) zu ermitteln. Der in dieser Offenbarung beschriebene Vertrauenswert kann also ein Vertrauenswert für ein vereintes synthetisches Bild sein, das auf Basis von Modifikationen des mindestens einen empfangen Bildes erzeugt wird, und/oder es kann ein Vertrauenswert für ein synthetisches Bild sein, das auf Basis des unmodifizierten mindestens einen empfangenen Bildes erzeugt wird.

Im Folgenden wird die Ermittlung des mindestens einen Vertrauenswertes näher beschrieben.

Der mindestens eine Vertrauenswert kann ein Wert sein, der angibt, inwieweit man einem synthetischen Bild (z.B. dem vereinten synthetischen Bild und/oder einem synthetischen Bild, das auf Basis der *m* empfangenen unmodifizierten Bilder erzeugt wurde) vertrauen kann. Der Vertrauenswert kann positiv mit der Vertrauenswürdigkeit des synthetischen Bildes korrelieren, d.h., wenn der Vertrauenswert gering ist, ist auch die Vertrauenswürdigkeit gering und wenn der Vertrauenswert hoch ist, ist auch die Vertrauenswürdigkeit hoch. Es ist aber auch möglich, dass der Vertrauenswert negativ mit der Vertrauenswürdigkeit korreliert; d.h., wenn der Vertrauenswert gering ist, ist die Vertrauenswürdigkeit hoch und wenn der Vertrauenswert hoch ist, ist die Vertrauenswürdigkeit gering. Bei einer negativen Korrelation kann man anstelle des Vertrauenswerts auch von einem Unsicherheitswert sprechen: ist der Unsicherheitswert hoch, dann geht von dem synthetischen Bild eine hohe Unsicherheit aus; es ist möglich, dass das synthetische Bild ein oder mehrere Artefakte aufweist; es ist möglich, dass für Strukturen und/oder Morphologien und/oder Texturen in dem synthetischen Bild keine Entsprechung in der Realität existiert, d.h., dass Strukturen und/oder Morphologien und/oder Texturen in dem synthetischen Bild nicht auf reale Strukturen und/oder reale Morphologien und/oder reale Texturen im Untersuchungsbereich zurückgeführt werden können. Ein geringer Unsicherheitswert hingegen zeigt an, dass das synthetische Bild eine geringe Unsicherheit aufweist; Merkmale in dem synthetischen Bild haben eine Entsprechung in der Realität; dem synthetischen Bild kann vertraut werden; eine medizinische Diagnose kann auf Basis des synthetischen Bildes gestellt und/oder eine medizinische Therapie kann auf Basis des synthetischen Bildes initiiert werden.

Ein Vertrauenswert, der positiv mit der Vertrauenswürdigkeit korreliert, kann prinzipiell auch in einen Vertrauenswert, der negativ mit der Vertrauenswürdigkeit korreliert (einen Unsicherheitswert), umgewandelt werden, beispielsweise, indem man das Reziproke (den Kehrwert) bildet. Umgekehrt kann entsprechend auch ein Vertrauenswert, der negativ mit der Vertrauenswürdigkeit korreliert (ein Unsicherheitswert), in einen Vertrauenswert, der positiv mit der Vertrauenswürdigkeit korreliert, umgewandelt werden.

Der mindestens eine Vertrauenswert kann auf Basis korrespondierender Bildelemente synthetischer Bilder ermittelt werden.

Für jedes k-Tupel korrespondierender Bildelemente der erzeugten synthetischen Bilder werden die Farbwerte ermittelt. Dabei gibt *k* die Zahl der miteinander korrespondierenden Bildelemente an.

Je mehr sich die Farbwerte korrespondierender Bildelemente in den synthetischen Bildern unterscheiden, desto einen größeren Unterschied macht es, auf welcher Modifikation / welchen Modifikationen die Erzeugung eines synthetischen Bildes basiert. Wenn es jedoch einen großen Unterschied macht, auf welcher Modifikation / welchen Modifikationen ein synthetisches Bild basiert, dann geht von dem synthetischen Bild eine gewisse Unsicherheit aus; die Vertrauenswürdigkeit ist umso geringer, je größer die Unterschiede sind, die durch die unterschiedliche Modifikationen bei den Farbwerten korrespondierender Bildelemente hervorgerufen werden.

Daher kann das Ausmaß, in dem sich Farbwerte korrespondierender Bildelemente unterscheiden, als Maß für die Vertrauenswürdigkeit/Unsicherheit verwendet werden: je mehr sich Farbwerte korrespondierender Bildelemente unterscheiden, desto geringer ist die Vertrauenswürdigkeit, desto höher ist die Unsicherheit; je weniger sich Farbwerte korrespondierender Bildelemente unterscheiden, desto geringer ist die Unsicherheit, desto höher ist die Vertrauenswürdigkeit.

Die Vertrauenswürdigkeit/Unsicherheit kann also für jedes Tupel korrespondierender Bildelemente synthetischer Bilder der Mehrzahl an synthetischen Bildern ermittelt werden und repräsentiert dann die Vertrauenswürdigkeit/Unsicherheit (i) jedes synthetischen Bildes der Mehrzahl an synthetischen Bilder, (ii) der Gesamtheit der synthetischen Bilder der Mehrzahl an synthetischen Bildern, (iii) des vereinten synthetischen Bildes und (iv) des synthetischen Bildes, das auf Basis des mindestens einen empfangenen unmodifizierten Bildes erzeugt wurde.

Mit anderen Worten: es lässt sich für jedes einzelne Bildelement des vereinten synthetischen Bildes und/oder jedes synthetischen Bildes der Mehrzahl an synthetischen Bilder und/oder des synthetischen Bildes, das auf Basis des mindestens einen empfangenen unmodifizierten Bildes erzeugt wurde, ein Vertrauenswert ermitteln, der angibt, wie sehr man dem Farbwert des Bildelements vertrauen kann. Ein solcher Vertrauenswert kann beispielsweise die Streubreite der Farbwerte des Tupels korrespondierender Bildelemente sein. Die Streubreite ist definiert als die Differenz zwischen dem größten Wert und dem kleinsten Wert einer Variable. Es kann also für jedes Tupel korrespondierender Bildelemente ein maximaler Farbwert und ein minimaler Farbwert ermittelt und die Differenz zwischen dem maximalen und dem minimalen Farbwert gebildet werden. Das Ergebnis ist die Streubreite der Farbwerte des Tupels korrespondierender Bildelemente, die als Vertrauenswert verwendet werden kann.

Gibt es mehr als einen Farbwert (zum Beispiel drei Farbwerte, wie im Fall von Bildern, deren Farbwerte gemäß dem RGB-Farbmodell spezifiziert sind), kann für jeden Farbkanal ein maximaler und ein minimaler Farbwert ermittelt und die Differenz für jeden Farbkanal gebildet werden. Es ergeben sich drei Streubreiten. Es kann für jeden Farbkanal die jeweilige Streubreite als ein eigener Vertrauenswert verwendet werden; es ist aber auch möglich, die Streubreiten der Farbkanäle zu einem einzigen Wert zu kombinieren; es ist möglich, die maximale Streubreite als Vertrauenswert zu verwenden; es ist möglich einen Mittelwert (z.B. das arithmetische Mittel, das geometrische Mittel, das quadratische Mittel oder einen anderen Mittelwert) der Streubreiten als Vertrauenswert zu verwenden; es ist möglich, die Länge des Vektors, den die Streubreiten in einem dreidimensionalen Raum (oder einem höherdimensionalen Raum bei Verwendung von mehr als drei Farbkanälen) spezifizieren, als Vertrauenswert zu verwenden; weitere Möglichkeiten sind denkbar.

Ein Vertrauenswert für ein Tupel korrespondierender Bildelemente kann auch die Varianz und/oder die Standardabweichung der Farbwerte der korrespondierenden Bildelemente sein. Die Varianz ist definiert als die mittlere quadratische Abweichung einer Variablen von ihrem Erwartungswert; die Standardabweichung ist definiert als die Quadratwurzel der Varianz.

Ein Vertrauenswert kann auch ein anderes Streuungsmaß sein, wie beispielweise die Summe der Abweichungsquadrate, der Variationskoeffizient, die mittlere absolute Abweichung, ein Quantilsabstand, ein Interquantilsabstand, der mittlere absolute Abstand vom Median, der Median der absoluten Abweichungen und/oder die geometrische Standardabweichung. Es ist auch möglich, dass es mehr als einen Vertrauenswert für ein Tupel korrespondierender Bildelemente gibt.

Es ist auch möglich, dass die Methode zur Berechnung eines Vertrauenswerts nicht für jedes Tupel korrespondierender Bildelemente gleich ist. Es ist möglich, dass für verschiedene Teilbereiche des Untersuchungsobjekts verschiedene Methoden zur Berechnung eines Vertrauenswertes verwendet werden. Es ist zum Beispiel möglich, dass für Bildelemente, die ein spezifisches Gewebe und/oder ein Organ und/oder eine Läsion repräsentieren, eine andere Methode zur Berechnung eines Vertrauenswerts verwendet wird, als für Bildelemente, die ein anderes Gewebe und/oder ein anderes Organ und/oder einen anderen Teilbereich repräsentieren. Teilbereiche, für die verschiedene Rechenvorschriften für die Vertrauenswerte gelten, können beispielsweise mit Hilfe einer Segmentierung identifiziert werden.

Bei der Segmentierung kann jedem Bildelement eines Bildes ein Kennzeichen (z.B. eine Zahl) zugewiesen werden, so dass Bildelemente mit demselben Kennzeichen bestimmte gemeinsame Merkmale aufweisen, z.B. das gleiche Gewebe (z.B. Knochengewebe oder Fettgewebe oder gesundes Gewebe oder erkranktes Gewebe (z.B. Tumorgewebe) oder Muskelgewebe und/oder dergleichen) und/oder dasselbe Organ repräsentieren. Für korrespondierende Bildelemente mit einem spezifischen Kennzeichen kann dann eine spezifische Rechenvorschrift zur Berechnung eines Vertrauenswerts verwendet werden; für korrespondierende Bildelemente mit einem anderen (spezifischen) Kennzeichen kann eine andere (spezifische) Rechenvorschrift zur Berechnung eines Vertrauenswerts verwendet werden.

Die für Tupel korrespondierender Bildelemente ermittelten Vertrauenswerte können ausgegeben (z.B. auf einem Monitor angezeigt oder auf einem Drucker ausgedruckt), in einem Datenspeicher gespeichert und/oder an ein separates Computersystem z.B. über ein Netzwerk übermittelt werden.

Die für Tupel korrespondierender Bildelemente ermittelten Vertrauenswerte können auch bildhaft dargestellt werden.

Neben dem vereinten synthetischen Bild und/oder dem synthetischen Bild, das auf Basis des mindestens einen empfangenen unmodifizierten Bildes erzeugt wurde, kann also eine weitere Repräsentation des Untersuchungsbereichs ausgegeben (z.B. auf einem Monitor angezeigt) werden, in der für jedes Bildelement angezeigt wird, wie vertrauenswürdig es ist. Eine solche Repräsentation wird in dieser Beschreibung auch als Vertrauensrepräsentation bezeichnet. Die Vertrauensrepräsentation hat vorzugsweise die gleiche Dimension und Größe wie das vereinte synthetische Bild und/oder das Bild, das auf Basis des mindestens einen empfangenen unmodifizierten Bildes erzeugt wurde; jedem Bildelement des vereinten synthetischen Bildes und/oder dem Bild, das auf Basis des mindestens einen empfangenen unmodifizierten Bildes erzeugt wurde, ist vorzugsweise ein Bildelement in der Vertrauensrepräsentation zugeordnet.

Anhand einer solchen Vertrauensrepräsentation kann ein Nutzer (z.B. ein Arzt) für jedes einzelne Bildelement erkennen, wie weit er dem Farbwert des Bildelements vertrauen kann. Es ist möglich, die Vertrauensrepräsentation mit dem vereinten synthetischen Bild und/oder dem Bild, das auf Basis des mindestens einen empfangenen unmodifizierten Bildes erzeugt wurde, ganz oder teilweise überlagert darzustellen. Es ist möglich, die überlagerte Darstellung so zu gestalten, dass der Nutzer sie ein- und ausblenden kann. Der Nutzer kann sich das vereinte synthetische Bild und/oder das synthetische Bild, das auf Basis des mindestens einen empfangenen unmodifizierten Bildes erzeugt wurde, beispielsweise Schicht für Schicht anzeigen lassen, so wie es für computertomografische, magnetresonanztomografische und andere drei- oder höherdimensionale Repräsentationen üblich ist. Bei jeder Schicht kann er die entsprechende Schicht der Vertrauensrepräsentation einblenden lassen, um zu prüfen, ob Bildelemente in der Schicht, die Strukturen, Morphologien und/oder Texturen zeigen, vertrauenswürdig oder unsicher sind. Auf diese Weise kann der Nutzer erkennen, wie hoch das Risiko ist, dass es sich bei den Strukturen, Morphologien und/oder Texturen um reale Eigenschaften des Untersuchungsbereichs oder um Artefakte handelt.

Bildelemente mit einer geringen Vertrauenswürdigkeit (mit einer hohen Unsicherheit) können beispielsweise hell und/oder mit einer Signalfarbe (z.B. rot oder orange oder gelb) dargestellt werden, während Bildelemente mit einer hohen Vertrauenswürdigkeit (mit einer geringen Unsicherheit) dunkel oder mit einer unauffälligeren oder beruhigenden Farbe (z.B. grün oder blau) dargestellt werden können. Es ist auch möglich, dass nur diejenigen Bildelemente bei einer Überlagerung dargestellt werden, bei denen der Vertrauenswert einen vordefinierten Grenzwert über- oder unterschreitet. Korreliert der Vertrauenswert positiv mit der Vertrauenswürdigkeit können beispielsweise nur diejenigen Bildelemente der Vertrauensrepräsentation dargestellt werden, deren Vertrauenswert unterhalb eines vordefinierten Grenzwerts liegt; in einem solchen Fall werden einem Nutzer (z.B. einem Arzt) nur diejenigen Bildelemente zur Kenntnis gegeben, denen er eher nicht vertrauen sollte.

Es ist auch möglich, dass Vertrauenswerte für Teilbereiche des vereinten synthetischen Bildes und/oder des Bildes, das auf Basis des mindestens einen empfangenen unmodifizierten Bildes erzeugt wurde (z.B. Schichten innerhalb des jeweiligen synthetischen Bildes) und/oder für das gesamte vereinte synthetische Bild und/oder das gesamte synthetische Bild, das auf Basis des mindestens einen empfangenen unmodifizierten Bildes erzeugt wurde, ermittelt werden. Eine Ermittlung solcher Vertrauenswerte für Teilbereiche oder gesamte Bilder kann auf Basis der Vertrauenswerte derjenigen Bildelemente erfolgen, aus denen sie zusammengesetzt sind. Zur Ermittlung eines Vertrauenswerts einer Schicht können beispielsweise alle Vertrauenswerte derjenigen Bildelemente berücksichtigt werden, die in dieser Schicht liegen. Es ist aber auch möglich, auch benachbarte Bildelemente (zum Beispiel Bildelemente der Schicht über und/oder unter betrachteten Schicht) zu berücksichtigen. Ein Vertrauenswert für einen Teilbereich oder den gesamten Bereich kann beispielsweise durch Mittelwertbildung (z.B. arithmetischer Mittelwert, geometrisches Mittel, quadratische Mittel oder einen anderen Mittelwert) ermittelt werden. Es ist auch möglich, den Maximalwert (z.B. bei einem Vertrauenswert, der negativ mit der Vertrauenswürdigkeit korreliert) oder den Minimalwert (z.B. bei einem Vertrauenswert, der negativ mit der Vertrauenswürdigkeit korreliert) der Vertrauenswerte der Bildelemente eines Teilbereichs oder des Gesamtbereichs zu ermitteln und diesen als Vertrauenswert des Teilbereichs oder des Gesamtbereichs zu verwenden. Weitere Möglichkeiten, einen Vertrauenswert für einen Teilbereich oder den Gesamtbereich auf Basis der Vertrauenswerte einzelner Bildelemente zu ermitteln, sind denkbar.

Eine solcher Vertrauenswert für einen Teilbereich oder den Gesamtbereich kann ebenfalls ausgegeben (z.B. auf einem Monitor angezeigt oder auf einem Drucker ausgegeben), in einem Datenspeicher gespeichert und/oder an ein separates Computersystem übermittelt werden. Er kann auch, wie für die einzelnen Vertrauenswerte beschrieben, bildhaft (z.B. farblich) dargestellt werden.

Ist ein positiv mit der Vertrauenswürdigkeit korrelierender Vertrauenswert für einen Teilbereich oder den Gesamtbereich geringer als ein vordefinierter Grenzwert, dann ist es möglich, dass dem entsprechenden Teilbereich oder Gesamtbereich kein Vertrauen geschenkt werden sollte. Es ist möglich, dass, ein solcher Teilbereich oder der entsprechende Gesamtbereich wie oben beschrieben gar nicht ausgegeben (z.B. gar nicht angezeigt) wird, oder dass er mit einem Warnhinweis angezeigt wird, dass ein Nutzer bei der Interpretation der angezeigten Daten vorsichtig sein sollte, da die angezeigten Daten unsicher sind.

Es ist auch möglich, dass dem Nutzer des Computersystems/Computerprogramms der vorliegenden Offenbarung über eine Nutzerschnittstelle die Möglichkeit gegeben wird, in dem vereinten synthetischen Bild zu Teilbereichen zu navigieren, die eine niedrige Vertrauenswürdigkeit aufweisen. Dem Nutzer können beispielsweise die Teilbereiche mit der niedrigsten Vertrauenswürdigkeit in einer Liste angezeigt werden (z.B. in Form einer Liste mit einer Zahl *q* an Teilbereichen, die den niedrigsten positiv mit der Vertrauenswürdigkeit korrelierenden Vertrauenswert aufweisen, wobei *q* eine positive ganze Zahl ist). Durch ein Anklicken eines Listeneintrags kann dem Nutzer der entsprechende Teilbereich in Form eines synthetischen Bildes, des vereinten synthetischen Bildes, einer Vertrauensrepräsentation und/oder einem empfangenen Bild und/oder einem Ausschnitt davon angezeigt werden.

Die Erfindung wird nachstehend anhand von Zeichnung näher erläutert, ohne die Erfindung auf die in den Zeichnungen dargestellten Merkmale und Merkmalskombinationen beschränken zu wollen. Aussagen, die in Bezug auf die in den Zeichnungen gezeigten Ausführungsformen getätigt werden, sollen allgemein gelten, d.h. analog auch auf andere Ausführungsformen anwendbar sein und nicht auf die gezeigten Ausführungsform beschränkt sein.

Fig. 1 zeigt beispielhaft und schematisch die Erzeugung von Modifikationen von empfangenen Bildern, die Erzeugung einer Mehrzahl an synthetischen Bildern auf Basis der Modifikationen mit Hilfe eines generativen Modells und die Erzeugung eines vereinten synthetischen Bildes auf Basis der Mehrzahl an synthetischen Bildern.

In dem in Fig. 1 gezeigten Beispiel werden zwei Bilder empfangen, ein erstes Bild I1 und ein zweites Bild I2. Bei den Bildern I1 und I2 handelt es sich um medizinische Aufnahmen eines Untersuchungsbereichs eines Untersuchungsobjekts. Das Untersuchungsobjekt ist ein Mensch und der Untersuchungsbereich umfasst die Lunge des Menschen.

Von jedem empfangenen Bild wird eine Mehrzahl an Modifikationen erzeugt. In dem in Fig. 1 dargestellten Beispiel werden von dem ersten Bild I1 die drei Modifikationen M11, M12 und M13 und von dem zweiten Bild I2 die drei Modifikationen M21, M22 und M23 erzeugt.

Die Modifikation M11 wird durch ein Verzerren des ersten Bildes I1 erzeugt.

Die Modifikation M12 wird durch zeilenweises Verschieben der Bildelemente des ersten Bildes I1 um einen zufälligen Betrag innerhalb vordefinierter Grenzen erzeugt.

Die Modifikation M13 wird durch Addieren von Rauschen zu dem ersten Bild I1 erzeugt.

Die Modifikation M21 wird durch Drehen des zweiten Bildes I2 um eine Achse, die senkrecht zur Zeichnungsebene liegt, um einen vordefinierten Winkel erzeugt.

Die Modifikation M22 wird durch Löschen von Teilbereichen des zweiten Bildes I2 erzeugt.

Die Modifikation M23 wird durch Erniedrigen der Auflösung des zweiten Bildes I2 erzeugt.

Die Modifikationen M11, M12 und M13 unterscheiden sich voneinander; es werden unterschiedliche Augmentierungstechniken angewandt, um aus dem ersten Bild I1 die drei Modifikationen M11, M12 und M13 zu erzeugen.

Ebenso unterscheiden sich die Modifikationen M21, M22 und M23 voneinander; es werden unterschiedliche Augmentierungstechniken angewandt, um aus dem zweiten Bild I2 die drei Modifikationen M22, M22 und M23 zu erzeugen.

In dem in Fig. 1 gezeigt Beispiel sind alle Augmentierungstechniken verschieden. Es ist aber möglich, dass bei verschiedenen empfangenen Bildern die gleichen Augmentierungstechniken verwendet werden. So ist es beispielsweise möglich, dass zum Erzeugen der Modifikation M11 aus dem ersten Bild I1 die gleiche Augmentierungstechnik verwendet wird, wie zum Erzeugen der Modifikation M21, M22 oder M23 aus dem zweiten Bild. Wenn bei verschiedenen empfangenen Bildern gleiche Augmentierungstechniken verwendet werden, dann werden vorzugsweise die gleichen Augmentierungstechniken zum Erzeugen solcher Modifikationen verwendet, die gemeinsam dem generativen Modell zugeführt werden. In dem in Fig. 1 gezeigt Beispiel wären dies die Modifikationen M11 und M21, M12 und M22 sowie M13 und M23.

In dem in Fig. 1 dargestellten Beispiel werden die Modifikationen paarweise einem generativen Modell GM zugeführt. Zum besseren Verständnis ist das generative Modell GM in Fig. 1 viermal dargestellt; es handelt sich aber stets um dasselbe Modell.

Das generative Modell GM ist konfiguriert, auf Basis von zwei Bildern ein synthetisches Bild zu erzeugen.

Dem generativen Modell GM werden die Modifikationen M11 und M21 zusammen zugeführt. Das generative Modell GM erzeugt auf Basis der Modifikationen M11 und M21 ein erstes synthetisches Bild S1. Dem generativen Modell GM werden ferner die Modifikationen M12 und M22 zusammen zugeführt. Das generative Modell GM erzeugt auf Basis der Modifikationen M12 und M22 ein zweites synthetisches Bild S2. Dem generativen Modell GM werden ferner die Modifikationen M13 und M23 zusammen zugeführt. Das generative Modell GM erzeugt auf Basis der Modifikationen M13 und M23 ein drittes synthetisches Bild S3.

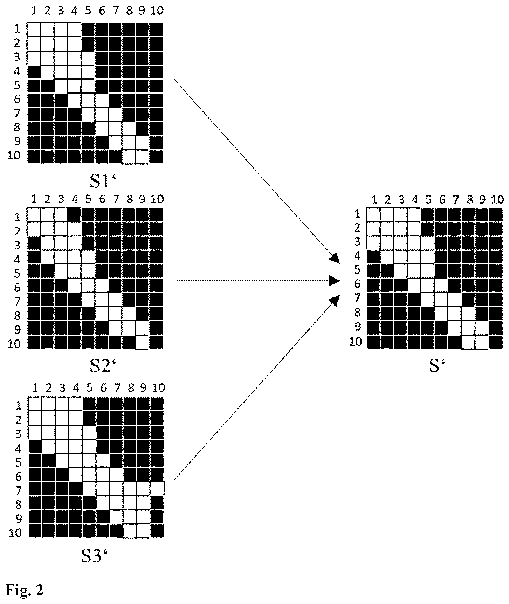

In dem in Fig. 1 dargestellten Beispiel werden die synthetischen Bilder S1, S2 und S3 zu einem vereinten synthetischen Bild S kombiniert. Ein Beispiel für eine solche Kombination ist in Fig. 2 schematisch dargestellt. Das vereinte synthetische Bild S kann ausgegeben (z.B. auf einem Monitor angezeigt oder auf einem Drucker ausgedruckt), in einem Datenspeicher gespeichert und/oder an ein separates Computersystem übermittelt werden.

Es ist auch möglich, dass kein vereintes synthetisches Bild erzeugt wird. Es ist möglich, dass die synthetischen Bilder S1, S2 und S3 lediglich erzeugt werden, um mindestens einen Vertrauenswert zu ermitteln.

In dem in Fig. 1 dargestellten Beispiel werden ferner das erste Bild I1 und das zweite Bild I2 gemeinsam dem generativen Modell GM zugeführt. Das generative Modell erzeugt auf Basis dieser unmodifizierten Bilder ein weiteres synthetisches Bild SI.

Es ist möglich, dass weitere synthetische Bild SI neben dem vereinten synthetischen Bild S oder anstelle des vereinten synthetischen Bildes S auszugeben.

Es ist möglich, dass weitere synthetische Bild SI in die Erzeugung des vereinten synthetischen Bildes einfließen zu lassen; in einem solchen Fall werden die synthetischen Bilder S1, S2, S3 und SI zum vereinten synthetischen Bild kombiniert.

Es ist möglich, weitere synthetische Bilder zu erzeugen. So kann beispielsweise ein weiteres synthetisches Bild dadurch erzeugt werden, dass das erste Bild I1 zusammen mit einer der Modifikationen M21, M22 und M23 dem generativen Modell GM zugeführt wird. Ebenso kann ein weiteres synthetisches Bild dadurch erzeugt werden, dass dem generativen Modell GM das zweite Bild I2 zusammen mit einer der Modifikationen M11, M12 oder M13 zugeführt wird. Ebenso ist es möglich, dass die Modifikation M11 zusammen mit einer der Modifikationen M22 oder M23 dem generativen Modell GM zugeführt wird. Ebenso ist es möglich, dass die Modifikation M12 zusammen mit einer der Modifikationen M21 oder M23 dem generativen Modell GM zugeführt wird. Ebenso ist es möglich, dass die Modifikation M13 zusammen mit einer der Modifikationen M21 oder M22 dem generativen Modell GM zugeführt wird.

Jedes weitere synthetische Bild, das erzeugt wird, kann in die Erzeugung des kombinierten synthetischen Bildes einfließen.

Jedes weitere synthetische Bild, das erzeugt wird, kann zum Ermitteln des mindestens einen Vertrauenswerts verwendet werden.

Fig. 2 zeigt beispielhaft und schematisch das Kombinieren von synthetischen Bildern zu einem vereinten synthetischen Bild.

Es sind drei synthetische Bilder S1', S2' und S3' dargestellt. Die drei synthetischen Bilder können vergrößerte Ausschnitte der in Fig. 1 gezeigten synthetischen Bilder S1, S2 und S3 sein.

Jedes der drei synthetischen Bilder S1', S2' und S3' weist eine Zahl von 10 · 10 = 100 Bildelementen auf. Die Bildelemente sind rasterförmig angeordnet; jeder Zeile und jeder Spalte ist eine Ziffer zugeordnet, so dass jedes Bildelement durch seine Koordinaten (Zeilenwert, Spaltenwert) eindeutig angegeben werden kann.

Bei den synthetischen Bildern S1', S2' und S3' handelt es sich um Binärbilder, d.h. jedem Bildelement ist entweder der Farbwert "weiß" oder der Farbwert "schwarz" zugeordnet.

Das vereinte synthetische Bild S' wird durch Kombinieren der synthetischen Bildern S1', S2' und S3' erzeugt. Das Kombinieren erfolgt auf Basis von korrespondierenden Bildelementen. Korrespondierende Bildelemente repräsentieren jeweils denselben Teilbereich des Untersuchungsbereich des Untersuchungsobjekts. Im vorliegenden Beispiel stimmen die Koordinaten korrespondierender Bildelemente überein. Das Bildelement mit den Koordinaten (1,1) des synthetischen Bildes S1' korrespondiert beispielsweise mit dem Bildelement mit den Koordinaten (1,1) des synthetischen Bildes S2' und mit dem Bildelement mit den Koordinaten (1,1) des synthetischen Bildes S3'. Die Bildelemente mit den Koordinaten (1,1) der synthetischen Bilder S1', S2' und S3' bilden ein Tupel korrespondierender Bildelemente. Die Zahl der miteinander korrespondierenden Bildelemente ist jeweils 3 (*k*=3); jedes der 100 Bildelemente jedes synthetischen Bildes korrespondiert mit jeweils zwei Bildelementen der jeweils anderen synthetischen Bilder.

Für jedes Tupel korrespondierender Bildelemente werden die Farbwerte ermittelt und es wird auf Basis der ermittelten Farbwerte der Farbwert des korrespondierenden Bildelements des vereinten synthetischen Bildes ermittelt.

Im vorliegenden Beispiel werden die synthetischen Bilder nach der folgenden Regel zu dem vereinten synthetischen Bild kombiniert: der Farbwert eines jeden Bildelements des vereinten synthetischen Bildes S' entspricht dem Farbwert der Mehrheit der Farbwerte der korrespondierenden Bildelemente der synthetischen Bilder S1', S2' und S3'.

Der Farbwert für das Bildelement mit den Koordinaten (1,1) des synthetischen Bildes S1' ist beispielsweise "weiß". Der Farbwert für das korrespondierende Bildelement mit den Koordinaten (1,1) des synthetischen Bildes S2' ist ebenfalls "weiß". Der Farbwert für das korrespondierende Bildelement mit den Koordinaten (1,1) des synthetischen Bildes S3' ist ebenfalls "weiß". Die Mehrheit der korrespondierenden Bildelemente (nämlich alle Bildelemente) hat den Farbwert "weiß". Dementsprechend wird der Farbwert des Bildelements mit den Koordinaten (1,1) des vereinten synthetischen Bildes ebenfalls auf "weiß" gesetzt.

Der Farbwert für das Bildelement mit den Koordinaten (1,4) des synthetischen Bildes S1' ist beispielsweise "weiß". Der Farbwert für das korrespondierende Bildelement mit den Koordinaten (1,4) des synthetischen Bildes S2' ist "schwarz". Der Farbwert für das korrespondierende Bildelement mit den Koordinaten (1,4) des synthetischen Bildes S3' ist "weiß". Die Mehrheit der korrespondierenden Bildelemente hat den Farbwert "weiß". Dementsprechend wird der Farbwert des Bildelements mit den Koordinaten (1,4) des vereinten synthetischen Bildes auf "weiß" gesetzt.

Der Farbwert für das Bildelement mit den Koordinaten (7,10) des synthetischen Bildes S1' ist beispielsweise "schwarz". Der Farbwert für das korrespondierende Bildelement mit den Koordinaten (7,10) des synthetischen Bildes S2' ist ebenfalls "schwarz". Der Farbwert für das korrespondierende Bildelement mit den Koordinaten (7,10) des synthetischen Bildes S3' ist "weiß". Die Mehrheit der korrespondierenden Bildelemente hat den Farbwert "schwarz". Dementsprechend wird der Farbwert des Bildelements mit den Koordinaten (7,10) des vereinten synthetischen Bildes auf "schwarz" gesetzt.

Es gibt zahlreiche weitere Methoden, wie synthetische Bilder zu einem vereinten synthetischen Bild kombiniert werden können.

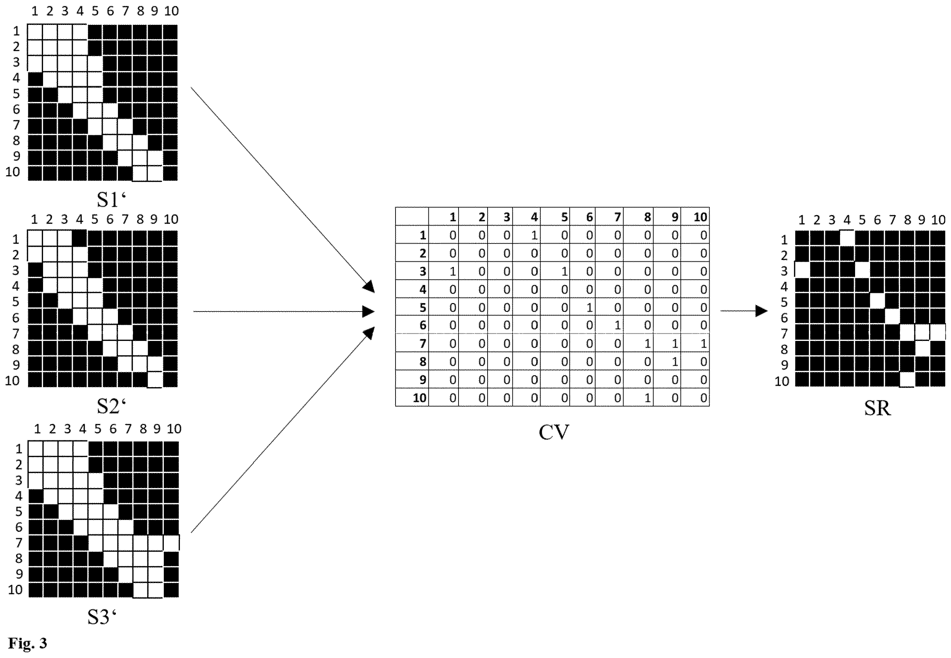

Fig. 3 zeigt beispielhaft und schematisch das Ermitteln des mindestens einen Vertrauenswertes. Das Ermitteln des mindestens einen Vertrauenswerts erfolgt auf Basis korrespondierender Bildelemente der bereits in Fig. 2 gezeigten synthetischen Bilder S1', S2' und S3'.

Es wird für jedes Tupel korrespondierender Bildelemente jeweils ein Vertrauenswert ermittelt. In einem ersten Schritt werden die Farbwerte aller Bildelemente ermittelt. Im vorliegenden Beispiel ist der Farbe "schwarz" wie allgemein üblich der Farbwert "0" und der Farbe "weiß" der Farbwert "1" zugeordnet.

Als Vertrauenswert wird für jedes Tupel korrespondierender Bildelemente der synthetischen Bilder S1', S2' und S3' die Streubreite der Farbwerte berechnet.

Der Farbwert für das Bildelement mit den Koordinaten (1,1) des synthetischen Bildes S1' ist beispielsweise "1" (weiß). Der Farbwert für das korrespondierende Bildelement mit den Koordinaten (1,1) des synthetischen Bildes S2' ist ebenfalls "1" (weiß). Der Farbwert für das korrespondierende Bildelement mit den Koordinaten (1,1) des synthetischen Bildes S3' ist ebenfalls "1" (weiß). Die Streubreite für das Tupel korrespondierender Bildelemente ist also 1 - 1 = 0.

Der Farbwert für das Bildelement mit den Koordinaten (1,4) des synthetischen Bildes S1' ist beispielsweise "1" (weiß). Der Farbwert für das korrespondierende Bildelement mit den Koordinaten (1,4) des synthetischen Bildes S2' ist "0" (schwarz). Der Farbwert für das korrespondierende Bildelement mit den Koordinaten (1,4) des synthetischen Bildes S3' ist "1" (weiß). Die Streubreite für das Tupel korrespondierender Bildelemente ist also 1 - 0 = 1.

Der Farbwert für das Bildelement mit den Koordinaten (7,10) des synthetischen Bildes S1' ist beispielsweise "0" (schwarz). Der Farbwert für das korrespondierende Bildelement mit den Koordinaten (7,10) des synthetischen Bildes S2' ist ebenfalls "0" (schwarz). Der Farbwert für das korrespondierende Bildelement mit den Koordinaten (7,10) des synthetischen Bildes S3' ist "1" (weiß). Die Streubreite für das Tupel korrespondierender Bildelemente ist also 1 - 0 = 1.

Die Vertrauenswerte sind in der Tabelle CV aufgelistet.

Die so ermittelten Vertrauenswerte korrelieren negativ mit der Vertrauenswürdigkeit.

Auf Basis der Vertrauenswerte lässt sich eine Vertrauensrepräsentation ermitteln. In dem in Fig. 3 dargestellten Beispiel wird der Farbwert jedes Bildelements in der Vertrauensrepräsentation SR auf den entsprechenden Vertrauenswert des Tupels korrespondierender Bildelemente gesetzt. So erhält beispielsweise das Bildelement mit den Koordinaten (1,1) in der Vertrauensrepräsentation die Farbe schwarz, während die Bildelemente mit den Koordinaten (1,4) und (7,10) die Farbe weiß erhalten. Anhand der Vertrauensrepräsentation SR kann ein Nutzer (z.B. ein Arzt) sofort erkennen, welche Bildelemente sicher (schwarz) und welche unsicher (weiß) sind. Bereichen, in denen viele weiße Bildelemente in der Vertrauensrepräsentation SR sollte der Nutzer weniger vertrauen.

Fig. 4 zeigt eine Ausführungsform des Verfahrens der vorliegenden Offenbarung in Form eines Ablaufschemas.

Das Verfahren (100) umfasst die Schritte:

| | |
|---|---|
| (110) | Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert, |
| (120) | Erzeugen einer Mehrzahl an unterschiedlichen Modifikationen des mindestens einen empfangenen Bildes, |
| (130) | Erzeugen einer Mehrzahl an synthetischen Bildern des Untersuchungsbereichs des Untersuchungsobjekts auf Basis der Modifikationen mittels eines generativen Modells, wobei jedes synthetische Bild eine Vielzahl an Bildelementen umfasst, wobei jedes Bildelement der Vielzahl an Bildelementen einen Teilbereich des Untersuchungsbereichs repräsentiert, wobei jedem Bildelement mindestens ein Farbwert zugeordnet ist, |
| (140) | Ermitteln eines Streuungsmaßes der Farbwerte korrespondierender Bildelemente der erzeugten synthetischen Bilder, wobei miteinander korrespondierende Bildelemente denselben Teilbereich des Untersuchungsbereichs repräsentieren, |
| (150) | Ermitteln mindestens eines Vertrauenswertes auf Basis des ermittelten Streuungsmaßes, |
| (160) | Ausgeben des mindestens einen Vertrauenswertes. |

Wie beschrieben kann das in dieser Beschreibung beschriebene generative Modell ein trainiertes Modell des maschinellen Lernens sein. Fig. 5 zeigt beispielhaft und schematisch ein Verfahren zum Trainieren eines solchen Modells des maschinellen Lernens.

Das Trainieren des generativen Modells GM erfolgt mit Trainingsdaten TD. Die Trainingsdaten TD umfassen, für jedes Referenzobjekt einer Vielzahl an Referenzobjekten, (i) mindestens ein Referenzbild des Referenzbereichs des Referenzobjekts in mindestens einem ersten Zustand als Eingabedaten und ein Referenzbild des Referenzobjekts in mindestens einem, vom ersten Zustand abweichenden Zustand. Der Begriff "Vielzahl an Referenzobjekten" bedeutet vorzugsweise mehr als 10, noch mehr bevorzugt mehr als 100 Referenzobjekte.

Der Begriff "Referenz" wird hier verwendet, um die Trainingsphase von der Phase der Nutzung des trainierten Modells zum Erzeugen synthetischer Bilder zu unterscheiden.

Ein "Referenzbild" ist ein Bild, das zum Trainieren des Modells verwendet wird. Das "Referenzobjekt" ist ein Objekt, von dem das Referenzbild stammt. Das Referenzobjekt ist üblicherweise wie das Untersuchungsobjekt ein Tier oder ein Mensch, vorzugsweise ein Mensch. Der Referenzbereich ist ein Teil des Referenzobjekts. Vorzugsweise handelt es sich bei dem Referenzbereich um den gleichen Teil wie der Untersuchungsbereich des Untersuchungsobjekts.

Der Begriff "Referenz" hat ansonsten aber keine einschränkende Bedeutung. Aussagen, die in dieser Beschreibung zu dem mindestens einen empfangenen Bild getroffen werden, treffen in analoger Weise auf jedes Referenzbild zu; Aussagen, die in dieser Beschreibung zu dem Untersuchungsobjekt getroffen werden, treffen in analoger Weise auf jedes Referenzobjekt zu; Aussagen, die in dieser Beschreibung zu dem Untersuchungsbereich getroffen werden, treffen in analoger Weise auf den Referenzbereich zu.

In dem in Fig. 5 dargestellten Beispiel ist nur ein Satz an Trainingsdaten TD eines Referenzobjekts gezeigt; üblicherweise umfassen die Trainingsdaten TD eine Vielzahl dieser Datensätze für eine Vielzahl an Referenzobjekten. In dem in Fig. 5 dargestellten Beispiel umfassen die Trainingsdaten TD ein erstes Referenzbild RI1, ein zweites Referenzbild RI2 und ein drittes Referenzbild RI3.

Das erste Referenzbild RI1 repräsentiert den Referenzbereich des Referenzobjekts in einem ersten Zustand; das zweite Referenzbild RI2 repräsentiert den Referenzbereich des Referenzobjekts in einem zweiten Zustand; das dritte Referenzbild RI3 repräsentiert den Referenzbereich des Referenzobjekts in einem dritten Zustand. Der erste Zustand, der zweite Zustand und der dritte Zustand unterscheiden sich üblicherweise voneinander. Zum Beispiel kann der Zustand eine Menge an Kontrastmittel repräsentieren, die in den Referenzbereich eingebracht wird oder worden ist. Zum Beispiel kann der Zustand einen Zeitpunkt vor und/oder nach einer Applikation eines Kontrastmittels repräsentieren.

Zum Beispiel kann das erste Referenzbild RI1 den Referenzbereich ohne oder nach Applikation einer ersten Menge eines Kontrastmittel, das zweite Referenzbild RI2 den Referenzbereich nach Applikation einer zweiten Menge des Kontrastmittels und das dritte Referenzbild RI3 den Referenzbereich nach Applikation einer dritten Menge des Kontrastmittels repräsentieren. Dabei kann die erste Menge kleiner als die zweite Menge und die zweite Menge kleiner als die dritte Menge sein (siehe z.B. WO2019/074938A1, WO2022184297A1).

Zum Beispiel kann das erste Referenzbild RI1 den Referenzbereich vor oder in einer ersten Zeitspanne nach Applikation eines Kontrastmittels, das zweite Referenzbild RI2 den Referenzbereich in einer zweiten Zeitspanne nach Applikation des Kontrastmittels und das dritte Referenzbild RI3 den Referenzbereich in einer dritten Zeitspanne nach Applikation des Kontrastmittels repräsentieren (siehe z.B. WO2021052896A1, WO2021069338A1).

Das erste Referenzbild RI1 und das zweite Referenzbild RI2 dienen in dem in Fig. 5 gezeigten Beispiel als Eingabedaten; sie werden dem generativen Modell GM zugeführt. Das generative Modell GM ist konfiguriert, auf Basis des ersten Referenzbildes RI1 und des zweiten Referenzbildes RI2 und auf Basis von Modellparametern MP ein synthetisches Bild S zu erzeugen. Das synthetische Bild S soll dem dritten Referenzbild RI3 möglichst nahe kommen. Das heißt, das dritte Referenzbild RI3 fungiert in dem in Fig. 5 gezeigten Beispiel als Zieldaten (*ground truth*).

Das von dem generativen Modell GM erzeugte synthetische Bild S wird mit dem dritten Referenzbild RI3 verglichen. Eine Fehlerfunktion LF wird verwendet, um Abweichungen zwischen dem synthetischen Bild S und dem dritten Referenzbild RI3 zu quantifizieren. Für jedes Paar aus einem synthetischen Bild und einem dritten Referenzbild kann mittels der Fehlerfunktion LF ein Fehlerwert berechnet werden.

In einem Optimierungsverfahren können der Fehlerwert und damit die Abweichungen zwischen dem vom generativen Modell erzeugten synthetischen Bild S und dem dritten Referenzbild RI3 durch Modifizieren von Modellparametern MP reduziert werden.

Der Prozess wird für eine Vielzahl an Referenzobjekten wiederholt.

Erreichen die Fehlerwerte ein vordefiniertes Minimum oder lassen sich die Fehlerwerte durch Modifizieren von Modellparametern nicht weiter reduzieren, kann das Training beendet werden. Das trainierte Modell kann gespeichert, an ein separates Computersystem übermittelt und/oder zur Erzeugung von synthetischen Bildern für (neue) Objekte (Untersuchungsobjekte) verwendet werden.

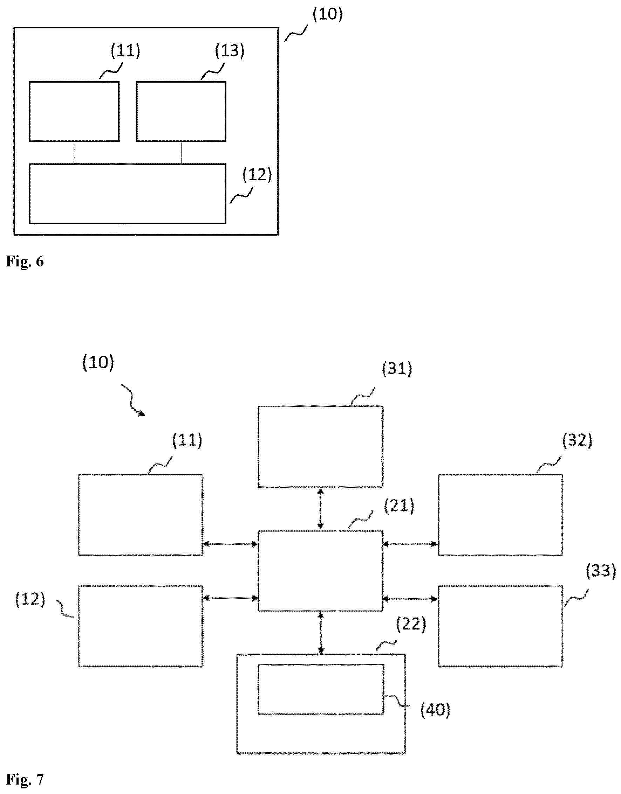

Fig. 6 zeigt beispielhaft und schematisch ein Computersystem gemäß der vorliegenden Offenbarung.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Das in Fig. 6 gezeigte Computersystem (10) umfasst eine Empfangseinheit (11), eine Steuer- und Recheneinheit (12) und eine Ausgabeeinheit (13).

Die Steuer- und Recheneinheit (12) dient der Steuerung des Computersystems (10), der Koordinierung der Datenflüsse zwischen den Einheiten des Computersystems (10) und der Durchführung von Berechnungen.

Die Steuer- und Recheneinheit (12) ist konfiguriert:
- die Empfangseinheit (11) zu veranlassen, mindestens ein Bild eines Untersuchungsbereichs eines Untersuchungsobjekts zu empfangen, wobei das mindestens eine Bild eine Vielzahl an Bildelementen umfasst, wobei jedes Bildelement der Vielzahl an Bildelementen einen Teilbereich des Untersuchungsbereichs repräsentiert,
- eine Mehrzahl an Modifikationen des mindestens einen empfangenen Bildes zu erzeugen,
- eine Mehrzahl an synthetischen Bildern des Untersuchungsbereichs des Untersuchungsobjekts auf Basis der Modifikationen mittels eines generativen Modells zu erzeugen, wobei jedes synthetische Bild eine Vielzahl an Bildelementen umfasst, wobei jedes Bildelement der Vielzahl an Bildelementen einen Teilbereich des Untersuchungsbereichs repräsentiert, wobei jedem Bildelement mindestens ein Farbwert zugeordnet ist,
- ein Streuungsmaß der Farbwerte korrespondierender Bildelemente der erzeugten synthetischen Bilder zu ermitteln, wobei miteinander korrespondierende Bildelemente denselben Teilbereich des Untersuchungsbereichs repräsentieren,
- einen Vertrauenswert auf Basis des Streuungsmaßes zu ermitteln,
- die Ausgabeeinheit (13) zu veranlassen, den Vertrauenswert auszugeben.

Fig. 7 zeigt beispielhaft und schematisch eine weitere Ausführungsform des Computersystems. Das Computersystem (10) umfasst eine Verarbeitungseinheit (21), die mit einem Speicher (22) verbunden ist. Die Verarbeitungseinheit (21) und der Speicher (22) bilden eine Steuer- und Recheneinheit, wie sie in Fig. 6 gezeigt ist.

Die Verarbeitungseinheit (21) (engl.: *processing unit*) kann einen oder mehrere Prozessoren allein oder in Kombination mit einem oder mehreren Speichern umfassen. Bei der Verarbeitungseinheit (21) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (21) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (21) kann konfiguriert sein, Computerprogramme auszuführen, die in einem Arbeitsspeicher der Verarbeitungseinheit (21) oder im Speicher (22) desselben oder eines anderen Computersystems gespeichert sein können.

Der Speicher (22) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (22) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher, eine austauschbare Computerdiskette, eine optische Disc, ein Magnetband oder eine Kombination der oben genannten. Zu den optischen Discs können Compact Discs mit Nur-Lese-Speicher (CD-ROM), Compact Discs mit Lese-/Schreibfunktion (CD-R/W), DVDs, Blu-ray-Discs und ähnliche gehören.

Zusätzlich zum Speicher (22) kann die Verarbeitungseinheit (21) auch mit einer oder mehreren Schnittstellen (11, 12, 31, 32, 33) verbunden sein, um Informationen anzuzeigen, zu übertragen und/oder zu empfangen. Die Schnittstellen können eine oder mehrere Kommunikationsschnittstellen (11, 32, 33) und/oder eine oder mehrere Benutzerschnittstellen (12, 31) umfassen. Die eine oder mehrere Kommunikationsschnittstellen können so konfiguriert sein, dass sie Informationen senden und/oder empfangen, z.B. zu und/oder von einer MRT-Scanner, einem CT-Scanner, einer Ultraschallkamera, anderen Computersystemen, Netzwerken, Datenspeichern oder dergleichen. Die eine oder mehrere Kommunikationsschnittstellen können so konfiguriert sein, dass sie Informationen über physische (verdrahtete) und/oder drahtlose Kommunikationsverbindungen übertragen und/oder empfangen. Die eine oder die mehreren Kommunikationsschnittstellen können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen können eine Anzeige (31) umfassen. Eine Anzeige (31) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und dergleichen umfassen.

Ein oder mehrere Computerprogramme (40) können im Speicher (22) gespeichert sein und von der Verarbeitungseinheit (21) ausgeführt werden, die dadurch programmiert wird, die in dieser Beschreibung beschriebenen Funktionen zu erfüllen. Das Abrufen, Laden und Ausführen von Anweisungen des Computerprogramms (40) kann sequenziell erfolgen, so dass jeweils ein Befehl abgerufen, geladen und ausgeführt wird. Das Abrufen, Laden und/oder Ausführen kann aber auch parallel erfolgen.

Das Computersystem der vorliegenden Offenbarung kann als Laptop, Notebook, Netbook und/der Tablet-PC ausgeführt sein, es kann auch ein Bestandteil eines MRT-Scanners, eines CT-Scanners oder eines Ultraschalldiagnosegeräts sein.

## Patentansprüche

1. Computer-implementiertes Verfahren umfassend:
- Empfangen mindestens eines Bildes (I1, I2) eines Untersuchungsbereichs eines Untersuchungsobjekts, wobei das mindestens eine Bild (I1, I2) eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an unterschiedlichen Modifikationen (M11, M12, M13, M21, M22, M23) des mindestens einen empfangenen Bildes (I1, I2),
- Erzeugen einer Mehrzahl an synthetischen Bildern (S1, S2, S3, S4) des Untersuchungsbereichs des Untersuchungsobjekts auf Basis der Modifikationen (M11, M12, M13, M21, M22, M23) mittels eines generativen Modells (GM), wobei jedes synthetische Bild (S1, S2, S3, S4) eine Vielzahl an Bildelementen umfasst, wobei jedes Bildelement der Vielzahl an Bildelementen einen Teilbereich des Untersuchungsbereichs repräsentiert, wobei jedem Bildelement mindestens ein Farbwert zugeordnet ist,
- Ermitteln eines Streuungsmaßes der Farbwerte korrespondierender Bildelemente der erzeugten synthetischen Bilder (S1, S2, S3, S4), wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

2. Verfahren gemäß Anspruch 1, umfassend:
- Empfangen eines ersten Bildes (I1) und eines zweiten Bildes (I2) des Untersuchungsbereichs des Untersuchungsobjekts,
- Erzeugen einer ersten Modifikation (M11) des ersten Bildes (I1), einer zweiten Modifikation (M12) des ersten Bildes (I1), einer ersten Modifikation (M21) des zweiten Bildes (I2) und einer zweiten Modifikation (M22) des zweiten Bildes (I2),
- Erzeugen eines ersten synthetischen Bildes (S1) auf Basis der ersten Modifikation (M11) des ersten Bildes (I1) und der ersten Modifikation (M21) des zweiten Bildes (I2) mittels des generativen Modells,
- Erzeugen eines zweiten synthetischen Bildes (S2) auf Basis der zweiten Modifikation (M12) des ersten Bildes (I1) und der zweiten Modifikation (M22) des zweiten Bildes (I2) mittels des generativen Modells,
- Ermitteln jeweils eines Streuungsmaßes der Farbwerte korrespondierender Bildelemente der erzeugten synthetischen Bilder für jedes Tupel korrespondierender Bildelemente,
- Ermitteln jeweils eines Vertrauenswertes für jedes Tupel korrespondierender Bildelemente der erzeugten synthetischen Bilder auf Basis des jeweiligen Streuungsmaßes des Tupels,
- Ausgeben der Vertrauenswerte.

3. Verfahren gemäß einem der Ansprüche 1 oder 2, umfassend:
- Empfangen einer Zahl *m* an Bildern (I1, I2), wobei *m* eine positive ganze Zahl ist,
- Erzeugen einer Zahl *p* an Modifikationen (M11, M12, M13, M21, M22, M23) von jedem der *m* Bilder (I1, I2), wobei *p* eine ganze Zahl größer als eins ist,
- Erzeugen jeweils eines synthetischen Bildes (S1, S2, S3, S4) auf Basis jeweils einer Modifikation (M11, M12, M13, M21, M22, M23) jedes der m Bilder (I1, I2),
- Ermitteln jeweils eines Streuungsmaßes der Farbwerte korrespondierender Bildelemente für jedes Tupel korrespondierender Bildelemente der erzeugten synthetischen Bilder,
- Ermitteln jeweils eines Vertrauenswertes für jedes Tupel korrespondierender Bildelemente der erzeugten synthetischen Bilder auf Basis des Streuungsmaßes des Tupels,
- Ausgeben der Vertrauenswerte.

4. Verfahren gemäß einem der Ansprüche 1 bis 3, ferner umfassend:
- Erzeugen eines synthetischen Bildes (SI) des Untersuchungsbereichs des Untersuchungsobjekts auf Basis des mindestens einen empfangenen Bildes (I1, I2).

5. Verfahren gemäß einem der Ansprüche 1 bis 4, wobei das Streuungsmaß eine Streubreite, eine Standardabweichung, eine Varianz, eine Summe von Abweichungsquadraten, ein Variationskoeffizient, eine mittlere absolute Abweichung, ein Quantilsabstand, ein Interquantilsabstand, ein mittlerer absoluter Abstand von einem Median, ein Median absoluter Abweichungen und/oder eine geometrische Standardabweichung der Farbwerte korrespondierender Bildelemente ist oder davon abgeleitet ist.

6. Verfahren gemäß einem der Ansprüche 1 bis 5, wobei jede Modifikation (M11, M12, M13, M21, M22, M23) durch Augmentieren des mindestens einen empfangenen Bildes (I1, I2) erzeugt wird.

7. Verfahren gemäß Anspruch 6, wobei das Augmentieren eine oder mehrere der folgenden Techniken umfasst: Reflexion, Rotation, Translation, Skalierung, Homothetie, Reflexion, Scherung, Verzerrung, Addieren von Rauschen, Variation von Farbwerten, Setzen von Farbwerten auf Null oder einen anderen Wert oder auf einen zufälligen Wert innerhalb definierter Grenzen, zeilenweises Verschieben von Bildelementen um einen definierten Betrag oder um einen zufälligen Betrag innerhalb definierter Grenzen, spaltenweises Verschieben von Bildelementen um einen definierten Betrag oder um einen zufälligen Betrag innerhalb definierter Grenzen, Verkleinerung und/oder Vergrößerung von Farbwerten um einen definierten Betrag oder um einen zufälligen Betrag innerhalb definierter Grenzen, Änderung der Schärfe und/oder des Kontrast eines Bildes, partielles Mischen von zwei oder mehreren Bildern des mindestens einen empfangen Bildes.

8. Verfahren gemäß einem der Ansprüche 1 bis 7, ferner umfassend:
- Erzeugen eines vereinten synthetischen Bildes (S) auf Basis der synthetischen Bilder (S1, S2, S3, S4, SI), wobei das Erzeugen des vereinten synthetischen Bildes (S) umfasst:
für jedes Tupel korrespondierender Bildelemente der synthetischen Bilder (S1, S2, S3, S4, SI): Ermitteln eines mittleren Farbwerts durch Mittelung der Farbwerte der korrespondierenden Bildelemente und Setzen des mittleren Farbwerts als Farbwert des korrespondierenden Bildelements des vereinten synthetischen Bildes (S).

9. Verfahren gemäß einem der Ansprüche 4 bis 8, ferner umfassend:
- Ausgeben des vereinten synthetischen Bildes (S) und/oder Übermitteln des vereinten synthetischen Bildes (S) an ein separates Computersystem, und/oder
- Ausgeben des auf Basis des mindestens einen empfangenen Bildes (I1, I2) erzeugten synthetischen Bildes (SI) und/oder Übermitteln des auf Basis des mindestens einen empfangenen Bildes (I1, I2) erzeugten synthetischen Bildes (SI) an ein separates Computersystem.

10. Verfahren gemäß einem der Ansprüche 1 bis 9, ferner umfassend:
- Erzeugen einer Vertrauensrepräsentation (SR), wobei die Vertrauensrepräsentation (SR) eine Vielzahl an Bildelementen umfasst, wobei jedes Bildelement der Vielzahl an Bildelementen einen Teilbereich des Untersuchungsbereichs repräsentiert, wobei jedes Bildelement einen Farbwert aufweist, wobei der Farbwert mit dem jeweiligen Vertrauenswert des Tupels korrespondierender Bildelemente der synthetischen Bilder korreliert,
- Ausgeben der Vertrauensrepräsentation (SR), vorzugsweise in einer überlagerten Darstellung mit dem vereinten synthetischen Bild (S) und/oder mit dem auf Basis des mindestens einen empfangenen Bildes (I1, I2) erzeugten synthetischen Bild (SI), und/oder Übermitteln der Vertrauensrepräsentation (SR) an ein separates Computersystem.

11. Verfahren gemäß einem der Ansprüche 8 bis 10, ferner umfassend:
- Ermitteln eines Vertrauenswertes für einen oder mehrere Teilbereiche des vereinten synthetischen Bildes (S), und/oder für das gesamte vereinte synthetische Bild (S),
- Ausgeben des Vertrauenswertes.

12. Verfahren gemäß einem der Ansprüche 1 bis 11, wobei das Untersuchungsobjekt ein Mensch oder Tier, vorzugsweise ein Säugetier, ganz besonders bevorzugt ein Mensch ist.

13. Verfahren gemäß einem der Ansprüche 1 bis 12, wobei es sich bei dem mindestens einen empfangenen Bild (I1, I2) um mindestens eine medizinische Aufnahme handelt und es sich bei jedem synthetischen Bild (S1, S2, S3, S4, SI) und/oder bei dem vereinten synthetischen Bild (S) um eine synthetische medizinische Aufnahme handelt.

14. Verfahren gemäß einem der Ansprüche 1 bis 13,
wobei das mindestens eine empfangene Bild (I1, I2) eine erste radiologische Aufnahme und eine zweite radiologische Aufnahme umfasst, wobei die erste radiologische Aufnahme den Untersuchungsbereich des Untersuchungsobjekts ohne Kontrastmittel oder nach Applikation einer ersten Menge eines Kontrastmittels repräsentiert und die zweite radiologische Aufnahme den Untersuchungsbereich des Untersuchungsobjekts nach Applikation einer zweiten Menge des Kontrastmittels repräsentiert,
wobei jedes synthetische Bild (S1, S2, S3, S4, SI) und/oder das vereinte synthetische Bild (S) eine synthetische radiologische Aufnahme ist, wobei jedes synthetische Bild (S1, S2, S3, S4, SI) und/oder das vereinte synthetische Bild (S) den Untersuchungsbereich des Untersuchungsobjekts nach Applikation einer dritten Menge des Kontrastmittels repräsentiert, wobei die zweite Menge verschieden von, vorzugweise größer ist als die erste Menge, und die dritte Menge verschieden von, vorzugsweise größer ist als die erste Menge und die zweite Menge.

15. Verfahren gemäß einem der Ansprüche 1 bis 13,
wobei das mindestens eine empfangene Bild (I1, I2) eine erste radiologische Aufnahme und eine zweite radiologische Aufnahme umfasst, wobei die erste radiologische Aufnahme den Untersuchungsbereich des Untersuchungsobjekts in einer ersten Zeitspanne vor oder nach Applikation eines Kontrastmittels repräsentiert und die zweite radiologische Aufnahme den Untersuchungsbereich des Untersuchungsobjekts in einer zweiten Zeitspanne nach Applikation des Kontrastmittels repräsentiert,
wobei jedes synthetische Bild (S1, S2, S3, S4, SI) und/oder das vereinte synthetische Bild (S) eine synthetische radiologische Aufnahme ist, wobei jedes synthetische Bild (S1, S2, S3, S4, SI) und/oder das vereinte synthetische Bild (S) den Untersuchungsbereich des Untersuchungsobjekts in einer dritten Zeitspanne nach Applikation des Kontrastmittels repräsentiert, wobei die zweite Zeitspanne vorzugsweise zeitlich auf die erste Zeitspanne folgt und die dritte Zeitspanne vorzugsweise zeitlich auf die zweite Zeitspanne folgt.

16. Computersystem (10) umfassend
- eine Empfangseinheit (11),
- eine Steuer- und Recheneinheit (12) und
- eine Ausgabeeinheit (13),
wobei die Steuer- und Recheneinheit (12) konfiguriert ist,
- die Empfangseinheit (11) zu veranlassen, mindestens ein Bild (I1, I2) eines Untersuchungsbereichs eines Untersuchungsobjekts zu empfangen, wobei das mindestens eine Bild (I1, I2) eine Vielzahl an Bildelementen umfasst, wobei jedes Bildelement der Vielzahl an Bildelementen einen Teilbereich des Untersuchungsbereichs repräsentiert,
- eine Mehrzahl an unterschiedlichen Modifikationen (M11, M12, M13, M21, M22, M23) des empfangenen Bildes (I1, I2) zu erzeugen,
- eine Mehrzahl an synthetischen Bildern (S1, S2, S3, S4) des Untersuchungsbereichs des Untersuchungsobjekts auf Basis der Modifikationen (M11, M12, M13, M21, M22, M23) mittels eines generativen Modells (GM) zu erzeugen, wobei jedes synthetische Bild (S1, S2, S3, S4) eine Vielzahl an Bildelementen umfasst, wobei jedes Bildelement der Vielzahl an Bildelementen einen Teilbereich des Untersuchungsbereichs repräsentiert, wobei jedem Bildelement mindestens ein Farbwert zugeordnet ist,
- ein Streuungsmaß der Farbwerte korrespondierender Bildelemente der erzeugten synthetischen Bilder (S1, S2, S3, S4) zu ermitteln, wobei miteinander korrespondierende Bildelemente denselben Teilbereich des Untersuchungsbereichs repräsentieren,
- einen Vertrauenswert auf Basis des Streuungsmaßes zu ermitteln,
- die Ausgabeeinheit (13) zu veranlassen, den mindestens einen Vertrauenswert auszugeben.

17. Computerlesbares Speichermedium umfassend ein Computerprogramm, das, wenn es in einen Arbeitsspeicher eines Computersystem geladen wird, das Computersystem veranlasst, folgende Schritte auszuführen:
- Empfangen mindestens eines Bildes (I1, I2) eines Untersuchungsbereichs eines Untersuchungsobjekts, wobei das mindestens eine Bild (I1, I2) eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an unterschiedlichen Modifikationen (M11, M12, M13, M21, M22, M23) des mindestens einen empfangenen Bildes (I1, I2),
- Erzeugen einer Mehrzahl an synthetischen Bildern (S1, S2, S3, S4) des Untersuchungsbereichs des Untersuchungsobjekts auf Basis der Modifikationen (M11, M12, M13, M21, M22, M23) mittels eines generativen Modells (GM), wobei jedes synthetische Bild (S1, S2, S3, S4) eine Vielzahl an Bildelementen umfasst, wobei jedes Bildelement der Vielzahl an Bildelementen einen Teilbereich des Untersuchungsbereichs repräsentiert, wobei jedem Bildelement mindestens ein Farbwert zugeordnet ist,
- Ermitteln eines Streuungsmaßes der Farbwerte korrespondierender Bildelemente der erzeugten synthetischen Bilder (S1, S2, S3, S4), wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

## Claims

1. Computer-implemented method comprising:
- Receiving at least one image (I1, I2) of an examination area of an examination object, wherein the at least one image (I1, I2) comprises a plurality of image elements, wherein each image element of the plurality of image elements represents a subarea of the examination area,
- Generating a plurality of different modifications (M11, M12, M13, M21, M22, M23) of the at least one received image (I1, I2),
- Generating a plurality of synthetic images (S1, S2, S3, S4) of the examination area of the examination object based on the modifications (M11, M12, M13, M21, M22, M23) using a generative model (GM), wherein each synthetic image (S1, S2, S3, S4) comprises a plurality of image elements, wherein each image element of the plurality of image elements represents a subarea of the examination area, wherein each image element is assigned at least one color value,
- Determining a measure of dispersion of the color values of corresponding image elements of the generated synthetic images (S1, S2, S3, S4), wherein corresponding image elements represent the same subarea of the examination area,
- Determining at least one confidence value based on the determined measure of dispersion,
- Outputting the at least one confidence value.

2. Method according to claim 1, comprising:
- Receiving a first image (I1) and a second image (I2) of the examination area of the examination object,
- Generating a first modification (M11) of the first image (I1), a second modification (M12) of the first image (I1), a first modification (M21) of the second image (I2) and a second modification (M22) of the second image (I2),
- Generating a first synthetic image (S1) based on the first modification (M11) of the first image (I1) and the first modification (M21) of the second image (I2) using the generative model,
- Generating a second synthetic image (S2) based on the second modification (M12) of the first image (I1) and the second modification (M22) of the second image (12) using the generative model,
- Determining in each case a measure of dispersion of the color values of corresponding image elements of the generated synthetic images for each tuple of corresponding image elements,
- Determining in each case a confidence value for each tuple of corresponding image elements of the generated synthetic images based on the respective measure of dispersion of the tuple,
- Outputting the confidence values.

3. Method according to one of claims 1 or 2, comprising:
- Receiving a number m of images (I1, I2), wherein m is a positive integer,
- Generating a number *p* of modifications (M11, M12, M13, M21, M22, M23) of each of the m images (I1, I2), wherein *p* is an integer greater than one,
- Generating in each case a synthetic image (S1, S2, S3, S4) based on in each case a modification (M11, M12, M13, M21, M22, M23) of each of the m images (I1, I2),
- Determining in each case a measure of dispersion of the color values of corresponding image elements for each tuple of corresponding image elements of the generated synthetic images,
- Determining in each case a confidence value for each tuple of corresponding image elements of the generated synthetic images based on the measure of dispersion of the tuple,
- Outputting the confidence values.

4. Method according to one of claims 1 to 3, further comprising:
- Generating a synthetic image (SI) of the examination area of the examination object based on the at least one received image (I1, I2).

5. Method according to one of claims 1 to 4, wherein the measure of dispersion is a range, a standard deviation, a variance, a sum of squared deviations, a coefficient of variation, a mean absolute deviation, a quantile range, an interquantile range, a mean absolute distance from a median, a median of absolute deviations and/or a geometric standard deviation of the color values of corresponding image elements or is derived therefrom.

6. Method according to one of claims 1 to 5, wherein each modification (M11, M12, M13, M21, M22, M23) is generated by augmenting the at least one received image (I1, I2).

7. Method according to claim 6, wherein augmenting comprises one or more of the following techniques: reflection, rotation, translation, scaling, homothety, reflection, shearing, distortion, adding noise, variation of color values, setting color values to zero or another value or to a random value within defined limits, shifting image elements row-wise by a defined amount or by a random amount within defined limits, shifting image elements column-wise by a defined amount or by a random amount within defined limits, decreasing and/or increasing color values by a defined amount or by a random amount within defined limits, changing the sharpness and/or contrast of an image, partial blending of two or more images of the at least one received image.

8. Method according to one of claims 1 to 7, further comprising:
- Generating a unified synthetic image (S) based on the synthetic images (S1, S2, S3, S4, SI), wherein generating the unified synthetic image (S) comprises:
for each tuple of corresponding image elements of the synthetic images (S1, S2, S3, S4, SI): Determining an average color value by averaging the color values of the corresponding image elements and setting the average color value as the color value of the corresponding image element of the unified synthetic image (S).

9. Method according to one of claims 4 to 8, further comprising:
- Outputting the unified synthetic image (S) and/or transmitting the unified synthetic image (S) to a separate computer system, and/or
- Outputting the synthetic image (SI) generated based on the at least one received image (11, 12) and/or transmitting the synthetic image (SI) generated based on the at least one received image (I1, I2) to a separate computer system.

10. Method according to one of claims 1 to 9, further comprising:
- Generating a confidence representation (SR), wherein the confidence representation (SR) comprises a plurality of image elements, wherein each image element of the plurality of image elements represents a subarea of the examination area, wherein each image element has a color value, wherein the color value correlates with the respective confidence value of the tuple of corresponding image elements of the synthetic images,
- Outputting the confidence representation (SR), preferably in an overlayed display with the unified synthetic image (S) and/or with the synthetic image (SI) generated based on the at least one received image (I1, I2), and/or transmitting the confidence representation (SR) to a separate computer system.

11. Process according to one of claims 8 to 10, further comprising:
- Determining a confidence value for one or more subareas of the unified synthetic image (S), and/or for the entire unified synthetic image (S),
- Outputting the confidence value.

12. Process according to one of claims 1 to 11, wherein the examination object is a human or animal, preferably a mammal, quite particularly preferred a human.

13. Process according to one of claims 1 to 12, wherein the at least one received image (I1, I2) is at least one medical image and each synthetic image (S1, S2, S3, S4, SI) and/or the unified synthetic image (S) is a synthetic medical image.

14. Process according to any one of claims 1 to 13, wherein the at least one received image (I1, I2) comprises a first radiological recording and a second radiological recording, wherein the first radiological recording represents the examination area of the examination object without contrast agent or after application of a first amount of a contrast agent and the second radiological recording represents the examination area of the examination object after application of a second amount of the contrast agent, wherein each synthetic image (S1, S2, S3, S4, SI) and/or the united synthetic image (S) is a synthetic radiological recording, wherein each synthetic image (S1, S2, S3, S4, SI) and/or the united synthetic image (S) represents the examination area of the examination object after application of a third amount of the contrast agent, wherein the second amount is different from, preferably greater than the first amount, and the third amount is different from, preferably greater than the first amount and the second amount.

15. Process according to any one of claims 1 to 13, wherein the at least one received image (I1, I2) comprises a first radiological recording and a second radiological recording, wherein the first radiological recording represents the examination area of the examination object in a first time period before or after application of a contrast agent and the second radiological recording represents the examination area of the examination object in a second time period after application of the contrast agent, wherein each synthetic image (S1, S2, S3, S4, SI) and/or the united synthetic image (S) is a synthetic radiological recording, wherein each synthetic image (S1, S2, S3, S4, SI) and/or the united synthetic image (S) represents the examination area of the examination object in a third time period after application of the contrast agent, wherein the second time period preferably follows the first time period in time and the third time period preferably follows the second time period in time.

16. Computer system (10) comprising
- a receiving unit (11),
- a control and computing unit (12) and
- an output unit (13),
wherein the control and computing unit (12) is configured
- to cause the receiving unit (11) to receive at least one image (I1, I2) of an examination area of an examination object, wherein the at least one image (I1, I2) comprises a plurality of image elements, wherein each image element of the plurality of image elements represents a partial area of the examination area,
- to generate a plurality of different modifications (M11, M12, M13, M21, M22, M23) of the received image (I1, I2),
- to generate a plurality of synthetic images (S1, S2, S3, S4) of the examination area of the examination object based on the modifications (M11, M12, M13, M21, M22, M23) using a generative model (GM), wherein each synthetic image (S1, S2, S3, S4) comprises a plurality of image elements, wherein each image element of the plurality of image elements represents a partial area of the examination area, wherein each image element is assigned at least one color value,
- to determine a measure of dispersion of the color values of corresponding image elements of the generated synthetic images (S1, S2, S3, S4), wherein corresponding image elements represent the same partial area of the examination area,
- to determine a confidence value based on the measure of dispersion,
- to cause the output unit (13) to output the at least one confidence value.

17. Computer-readable storage medium comprising a computer program, which, when loaded into a working memory of a computer system, causes the computer system to perform the following steps:
- Receiving at least one image (I1, I2) of an examination area of an examination object, wherein the at least one image (I1, I2) comprises a plurality of image elements, wherein each image element of the plurality of image elements represents a partial area of the examination area,
- Generating a plurality of different modifications (M11, M12, M13, M21, M22, M23) of the at least one received image (I1, I2),
- Generating a plurality of synthetic images (S1, S2, S3, S4) of the examination area of the examination object based on the modifications (M11, M12, M13, M21, M22, M23) using a generative model (GM), wherein each synthetic image (S1, S2, S3, S4) comprises a plurality of image elements, wherein each image element of the plurality of image elements represents a partial area of the examination area, wherein each image element is assigned at least one color value,
- Determining a measure of dispersion of the color values of corresponding image elements of the generated synthetic images (S1, S2, S3, S4), wherein corresponding image elements represent the same partial area of the examination area,
- Determining at least one confidence value based on the determined measure of dispersion,
- Outputting the at least one confidence value.

## Revendications

1. Procédé implémenté par ordinateur comprenant :
- Recevant au moins une image (I1, 12) d'une zone d'examen d'un objet d'examen, où l'au moins une image (I1, I2) comprend une pluralité d'éléments d'image, chaque élément d'image de la pluralité d'éléments d'image représentant une partie de la zone d'examen,
- Générant une pluralité de modifications différentes (M11, M12, M13, M21, M22, M23) de l'au moins une image reçue (I1, I2),
- Générant une pluralité d'images synthétiques (S1, S2, S3, S4) de la zone d'examen de l'objet d'examen sur la base des modifications (M11, M12, M13, M21, M22, M23) à l'aide d'un modèle génératif (GM), où chaque image synthétique (S1, S2, S3, S4) comprend une pluralité d'éléments d'image, chaque élément d'image de la pluralité d'éléments d'image représentant une partie de la zone d'examen, chaque élément d'image étant associé à au moins une valeur de couleur,
- Déterminant une mesure de dispersion des valeurs de couleur des éléments d'image correspondants des images synthétiques générées (S1, S2, S3, S4), où les éléments d'image correspondants représentent la même partie de la zone d'examen,
- Déterminant au moins une valeur de confiance sur la base de la mesure de dispersion déterminée,
- Sortant la valeur de confiance.

2. Procédé selon la revendication 1, comprenant :
- Recevant une première image (I1) et une deuxième image (12) de la zone d'examen de l'objet d'examen,
- Générant une première modification (M11) de la première image (11), une deuxième modification (M12) de la première image (11), une première modification (M21) de la deuxième image (12) et une deuxième modification (M22) de la deuxième image (12),
- Générant une première image synthétique (51) sur la base de la première modification (M11) de la première image (11) et de la première modification (M21) de la deuxième image (12) à l'aide du modèle génératif,
- Générant une deuxième image synthétique (52) sur la base de la deuxième modification (M12) de la première image (11) et de la deuxième modification (M22) de la deuxième image (12) à l'aide du modèle génératif,
- Déterminant dans chaque cas une mesure de dispersion des valeurs de couleur des éléments d'image correspondants des images synthétiques générées pour chaque tuple d'éléments d'image correspondants,
- Déterminant dans chaque cas une valeur de confiance pour chaque tuple d'éléments d'image correspondants des images synthétiques générées sur la base de la mesure de dispersion respective du tuple,
- Sortant les valeurs de confiance.

3. Procédé selon l'une des revendications 1 ou 2, comprenant :
- Recevant un nombre m d'images (I1, I2), où m est un nombre entier positif,
- Générant un nombre *p* de modifications (M11, M12, M13, M21, M22, M23) de chacune des m images (I1, I2), où *p* est un nombre entier supérieur à un,
- Générant dans chaque cas une image synthétique (S1, S2, S3, S4) sur la base dans chaque cas d'une modification (M11, M12, M13, M21, M22, M23) de chacune des m images (11, I2),
- Déterminant dans chaque cas une mesure de dispersion des valeurs de couleur des éléments d'image correspondants pour chaque tuple d'éléments d'image correspondants des images synthétiques générées,
- Déterminant dans chaque cas une valeur de confiance pour chaque tuple d'éléments d'image correspondants des images synthétiques générées sur la base de la mesure de dispersion du tuple,
- Sortant les valeurs de confiance.

4. Procédé selon l'une des revendications 1 à 3, comprenant également :
- Générant une image synthétique (SI) de la zone d'examen de l'objet d'examen sur la base de l'au moins une image reçue (11, 12).

5. Procédé selon l'une des revendications 1 à 4, où la mesure de dispersion est une amplitude de dispersion, un écart-type, une variance, une somme de carrés de déviations, un coefficient de variation, un écart absolu moyen, une distance quantile, une distance interquantile, une distance absolue moyenne par rapport à une médiane, une médiane des déviations absolues et/ou un écart-type géométrique des valeurs de couleur des éléments d'image correspondants ou est dérivé de ceux-ci.

6. Procédé selon l'une des revendications 1 à 5, où chaque modification (M11, M12, M13, M21, M22, M23) est générée par augmentation de l'au moins une image reçue (11, 12).

7. Procédé selon la revendication 6, où l'augmentation comprend une ou plusieurs des techniques suivantes : réflexion, rotation, translation, mise à l'échelle, homothétie, réflexion, cisaillement, distorsion, ajout de bruit, variation des valeurs de couleur, mise à zéro des valeurs de couleur ou à une autre valeur ou à une valeur aléatoire dans des limites définies, déplacement linéaire des éléments d'image d'un montant défini ou d'un montant aléatoire dans des limites définies, déplacement en colonne des éléments d'image d'un montant défini ou d'un montant aléatoire dans des limites définies, réduction et/ou augmentation des valeurs de couleur d'un montant défini ou d'un montant aléatoire dans des limites définies, modification de la netteté et/ou du contraste d'une image, mélange partiel de deux ou plusieurs images de l'au moins une image reçue.

8. Procédé selon l'une des revendications 1 à 7, comprenant également :
- Générant une image synthétique unifiée (S) sur la base des images synthétiques (S1, S2, S3, S4, SI), où la génération de l'image synthétique unifiée (S) comprend :
pour chaque tuple d'éléments d'image correspondants des images synthétiques (S1, S2, S3, S4, SI) : Déterminant une valeur de couleur moyenne par moyenne des valeurs de couleur des éléments d'image correspondants et définissant la valeur de couleur moyenne comme valeur de couleur de l'élément d'image correspondant de l'image synthétique unifiée (S).

9. Procédé selon l'une des revendications 4 à 8, comprenant également :
- Sortant l'image synthétique unifiée (S) et/ou transmettant l'image synthétique unifiée (S) à un système informatique séparé, et/ou
- Sortant l'image synthétique générée sur la base de l'au moins une image reçue (11, 12) et/ou transmettant l'image synthétique générée sur la base de l'au moins une image reçue (I1, I2) à un système informatique séparé.

10. Procédé selon l'une des revendications 1 à 9, comprenant également :
- Générant une représentation de confiance (SR), où la représentation de confiance (SR) comprend une pluralité d'éléments d'image, chaque élément d'image de la pluralité d'éléments d'image représentant une partie de la zone d'examen, chaque élément d'image ayant une valeur de couleur, où la valeur de couleur est corrélée avec la valeur de confiance respective du tuple d'éléments d'image correspondants des images synthétiques,
- Sortant la représentation de confiance (SR), de préférence dans une présentation superposée avec l'image synthétique unifiée (S) et/ou avec l'image synthétique générée sur la base de l'au moins une image reçue (I1, I2), et/ou transmettant la représentation de confiance (SR) à un système informatique séparé.

11. Procédé selon l'une des revendications 8 à 10, comprenant également:
- Détermination d'une valeur de confiance pour une ou plusieurs parties de l'image synthétique unifiée (S), et/ou pour l'ensemble de l'image synthétique unifiée (S),
- Sortie de la valeur de confiance.

12. Procédé selon l'une des revendications 1 à 11, dans l'objet d'examen est un humain ou un animal, de préférence un mammifère, tout particulièrement préféré un humain.

13. Procédé selon l'une des revendications 1 à 12, dans l'au moins une image reçue (11, 12) est au moins une image médicale et dans chaque image synthétique (S1, S2, S3, S4, SI) et/ou dans l'image synthétique unifiée (S) est une image médicale synthétique.

14. Procédé selon l'une des revendications 1 à 13, dans le ou les images reçues (11, 12) comprennent une première image radiologique et une deuxième image radiologique, dans la première image radiologique représente la zone d'examen de l'objet d'examen sans agent de contraste ou après application d'une première quantité d'agent de contraste, et la deuxième image radiologique représente la zone d'examen de l'objet d'examen après application d'une deuxième quantité d'agent de contraste, dans chaque image synthétique (S1, S2, S3, S4, SI) et/ou l'image synthétique unifiée (S) est une image radiologique synthétique, dans chaque image synthétique (S1, S2, S3, S4, SI) et/ou l'image synthétique unifiée (S) représente la zone d'examen de l'objet d'examen après application d'une troisième quantité d'agent de contraste, dans la deuxième quantité est différente de, de préférence plus grande que la première quantité, et la troisième quantité est différente de, de préférence plus grande que la première quantité et la deuxième quantité.

15. Procédé selon l'une des revendications 1 à 13, dans le ou les images reçues (11, 12) comprennent une première image radiologique et une deuxième image radiologique, dans la première image radiologique représente la zone d'examen de l'objet d'examen dans une première période avant ou après l'application d'un agent de contraste, et la deuxième image radiologique représente la zone d'examen de l'objet d'examen dans une deuxième période après l'application de l'agent de contraste, dans chaque image synthétique (S1, S2, S3, S4, SI) et/ou l'image synthétique unifiée (S) est une image radiologique synthétique, dans chaque image synthétique (S1, S2, S3, S4, SI) et/ou l'image synthétique unifiée (S) représente la zone d'examen de l'objet d'examen dans une troisième période après l'application de l'agent de contraste, dans la deuxième période suit de préférence la première période et la troisième période suit de préférence la deuxième période.

16. Système informatique (10) comprenant
- une unité de réception (11),
- une unité de contrôle et de calcul (12) et
- une unité de sortie (13),
dans l'unité de contrôle et de calcul (12) est configurée pour
- inciter l'unité de réception (11) à recevoir au moins une image (I1, I2) d'une zone d'examen d'un objet d'examen, dans l'image (11, 12) comprend une multitude d'éléments d'image, dans chaque élément d'image de la multitude d'éléments d'image représente une sous-zone de la zone d'examen,
- générer une pluralité de modifications différentes (M11, M12, M13, M21, M22, M23) de l'image reçue (I1, I2),
- générer une pluralité d'images synthétiques (S1, S2, S3, S4) de la zone d'examen de l'objet d'examen sur la base des modifications (M11, M12, M13, M21, M22, M23) à l'aide d'un modèle génératif (GM), dans chaque image synthétique (S1, S2, S3, S4) comprend une multitude d'éléments d'image, dans chaque élément d'image de la multitude d'éléments d'image représente une sous-zone de la zone d'examen, dans chaque élément d'image est associé à au moins une valeur de couleur,
- déterminer une mesure de dispersion des valeurs de couleur des éléments d'image correspondants des images synthétiques générées (S1, S2, S3, S4), dans les éléments d'image correspondants représentent la même sous-zone de la zone d'examen,
- déterminer une valeur de confiance sur la base de la mesure de dispersion,
- inciter l'unité de sortie (13) à sortir au moins une valeur de confiance.

17. Support de stockage lisible par ordinateur comprenant un programme d'ordinateur, qui, lorsqu'il est chargé dans la mémoire de travail d'un système informatique, incite le système informatique à exécuter les étapes suivantes:
- Recevoir au moins une image (I1, 12) d'une zone d'examen d'un objet d'examen, dans l'image (11, 12) comprend une multitude d'éléments d'image, dans chaque élément d'image de la multitude d'éléments d'image représente une sous-zone de la zone d'examen,
- Générer une pluralité de modifications différentes (M11, M12, M13, M21, M22, M23) de l'image reçue (I1, I2),
- Générer une pluralité d'images synthétiques (S1, S2, S3, S4) de la zone d'examen de l'objet d'examen sur la base des modifications (M11, M12, M13, M21, M22, M23) à l'aide d'un modèle génératif (GM), dans chaque image synthétique (S1, S2, S3, S4) comprend une multitude d'éléments d'image, dans chaque élément d'image de la multitude d'éléments d'image représente une sous-zone de la zone d'examen, dans chaque élément d'image est associé à au moins une valeur de couleur,
- Déterminer une mesure de dispersion des valeurs de couleur des éléments d'image correspondants des images synthétiques générées (S1, S2, S3, S4), dans les éléments d'image correspondants représentent la même sous-zone de la zone d'examen,
- Déterminer au moins une valeur de confiance sur la base de la mesure de dispersion déterminée,
- Sortir au moins une valeur de confiance.
